# EUROPEAN PATENT APPLICATION

(11) **EP 3 636 690 A1**
(43) Date of publication of application: **15.04.2020**
(21) Application number: 18813058.7
(22) Date of filing: 04.06.2018
(51) Int. Cl.: C08G 61/12

(54) **METHOD FOR PRODUCING POLYMER COMPOUND**

(30) Priority: 07.06.2017 JP 2017112969
(71) Applicant: Sumitomo Chemical Company, Limited, Tokyo 104-8260 (JP)
(72) Inventor: SUGIYAMA, Mayuko, Osaka-shi Osaka 554-8558 (JP); KASHIMA, Ken, Osaka-shi Osaka 555-0021 (JP); YATSUMONJI, Yasutaka, Oita-shi Oita 870-0106 (JP)
(74) Representative: J A Kemp LLP
(86) International application number: PCT/JP2018/021334
(87) International publication number: WO 2018/225674

(57) **Abstract**

An object of the present invention is to provide a method for producing a polymer compound having a crosslinkable group, the polymer compound having a low content of low-molecular-weight compounds and sufficiently low polydispersity. The method for producing a polymer compound having a crosslinkable group comprises the steps of: (1) polymerizing a monomer component in a solvent in the presence of a transition metal complex to thereby obtain a first polymer compound having a crosslinkable group, wherein the monomer component comprises a monomer having a crosslinkable group; and (2) mixing a solution containing a first solvent and the first polymer compound with a second solvent, followed by separation into two or more layers, and selecting a layer containing a polymer compound having the largest polystyrene-equivalent weight average molecular weight to thereby obtain a second polymer compound having a crosslinkable group, wherein the first solvent contains a solvent of the same kind as the solvent used in step (1), the second solvent is a poor solvent for the first polymer compound, and the solvent contained in each of the two or more layers is substantially an organic solvent.

## Description

### Technical Field

The present invention relates to a method for producing a polymer compound.

### Background Art

As materials for organic electroluminescence devices or the like, for example, polymer compounds are used. To improve characteristics of organic electroluminescence devices, such polymer compounds preferably have a low content of low-molecular-weight compounds and low polydispersity (Mw/Mn).

Polymer compounds can be synthesized, for example, by subjecting an aromatic diboronic acid and an aromatic dihalide to a Suzuki coupling reaction in the presence of a transition metal complex. For example, Non-patent Literature (NPL) 1 reports a synthesis method comprising subjecting a fluorene diboronic acid and dibromotriarylamine to a Suzuki coupling reaction. However, it has been difficult to obtain a polymer compound having sufficiently low polydispersity by this method.

It has also been reported that in the production of an organic electroluminescence device or the like, when an organic thin film is laminated by a wet film formation method, a polymer compound having a crosslinkable group is used to form the organic thin film (for example, Patent Literature (PTL) 1 and Patent Literature (PTL) 2).

### Citation List

### Patent Literature

PTL 1: JP2009-287000A
PTL 2: JP2009-263665A

### Non-patent Literature

NPL 1: RSC Advances, 2015, 5, p101826-101833

### Summary of Invention

### Technical Problem

An object of the present invention is to provide a method for producing a polymer compound having a crosslinkable group, the polymer compound having a low content of low-molecular-weight compounds and sufficiently low polydispersity.

### Solution to Problem

The present invention provides the following [1] to [10].
[1] A method for producing a polymer compound having a crosslinkable group, the method comprising the steps of:
   (1) polymerizing a monomer component in a solvent in the presence of a transition metal complex to thereby obtain a first polymer compound having a crosslinkable group, wherein the monomer component comprises a monomer having a crosslinkable group; and
   (2) mixing a solution containing a first solvent and the first polymer compound with a second solvent, followed by separation into two or more layers, and selecting a layer containing a polymer compound having the largest polystyrene-equivalent weight average molecular weight to thereby obtain a second polymer compound having a crosslinkable group, wherein the first solvent contains a solvent of the same kind as the solvent used in step (1), the second solvent is a poor solvent for the first polymer compound, and the solvent contained in each of the two or more layers is substantially an organic solvent.
[2] The method for producing a polymer compound according to [1], wherein the monomer component comprises a compound represented by formula (1) and a compound represented by formula (2), and
   the first polymer compound and the second polymer compound are each a polymer compound containing a constitutional unit represented by formula (3) and a constitutional unit represented by formula (4): 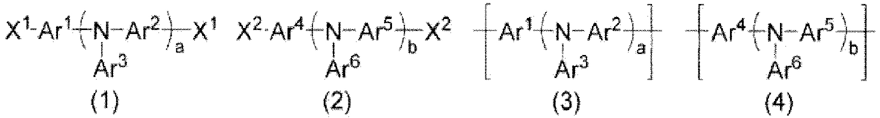
   wherein a and b each independently represent an integer of 0 to 2;
   Ar¹, Ar², Ar⁴, and Ar⁵ each independently represent a divalent aromatic hydrocarbon group, a divalent heterocyclic group, or a group in which a divalent aromatic hydrocarbon group and a divalent heterocyclic group are bonded, and these groups may have a substituent; when there are a plurality of Ar² or Ar⁵, they may be the same or different;
   Ar³ and Ar⁶ each independently represent a monovalent aromatic hydrocarbon group or a monovalent heterocyclic group, and these groups may have a substituent; when there are a plurality of Ar³ or Ar⁶, they may be the same or different;
   provided that at least one of Ar¹, Ar², Ar³, Ar⁴, Ar⁵, or Ar⁶ has a group containing a crosslinkable group as a substituent;
   X¹ represents a chlorine atom, a bromine atom, an iodine atom, or -O-S(=O)₂R^{a1}, wherein R^{a1} represents an alkyl group or an aryl group, and these groups may have a substituent; a plurality of X¹ may be the same or different; and
   X² represents -B(OH)₂, a borane residue, a boric acid ester residue, or -BF₃T, wherein T represents a lithium atom, a sodium atom, a potassium atom, a rubidium atom, or a cesium atom; and a plurality of X² may be the same or different.
[3] The method for producing a polymer compound according to [2], wherein the group containing a crosslinkable group is a group represented by formula (5):

   -L-(̵Y)ₙ (5)

   wherein L each independently represents a single bond, or -(CH₂)-, -O-, -S-, -(CO)-, -(C₆H₄)-, or a divalent group in which two or more groups selected from these groups are bonded; provided that -O- and -O-, -S- and -S-, and -O- and -S- are not directly bonded to each other;
   n represents an integer of 1 to 5; and
   Y represents a crosslinkable group; when there are a plurality of Y, they may be the same or different.
[4] The method for producing a polymer compound according to [3], wherein in formula (5), L is -(CH₂)ₘ-, -(CH₂)ₚ-(C₆H₄)- (CH₂)_{q}-, -(CH₂)ᵣ-O-(CH₂)ₛ-, or -(CH₂)ₜ-(C₆H₄)-O-(CH₂)ᵤ- ;
   m represents an integer of 0 to 20;
   p represents an integer of 0 to 10;
   q represents an integer of 0 to 10;
   r represents an integer of 0 to 10 ;
   s represents an integer of 0 to 10;
   t represents an integer of 0 to 10; and
   u represents an integer of 0 to 10.
[5] The method for producing a polymer compound according to [3] or [4], wherein in formula (5), the crosslinkable group represented by Y is a group selected from group A of crosslinkable groups:
   Group A of crosslinkable groups: 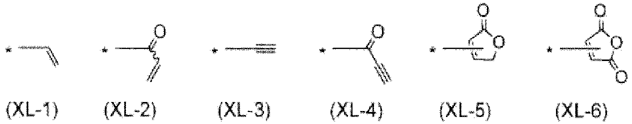 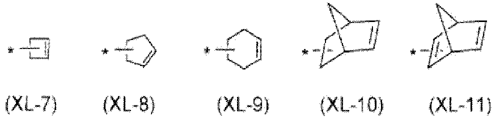 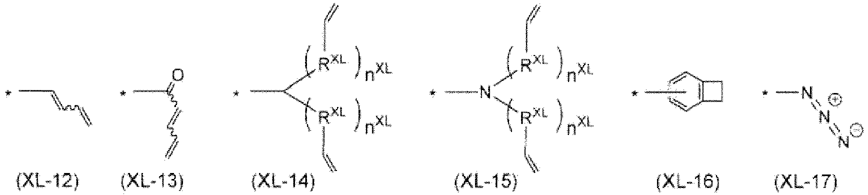 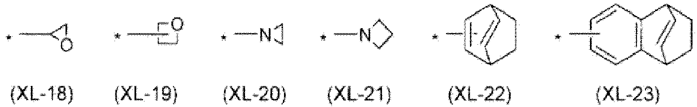
   wherein each of these groups may have a substituent selected from the group consisting of an alkyl group and an aryl group;
   n^{XL} represents an integer of 0 to 5; when there are a plurality of n^{XL}, they may be the same or different;
   R^{XL} represents -(CH₂)-, -O-, -S-, -(CO)-, or a divalent group in which two or more groups selected from these groups are bonded; provided that -O- and -O-, -S- and -S-, and -O- and -S-are not directly bonded to each other; when there are a plurality of R^{XL}, they may be the same or different; and
   * is a binding site with L.
[6] The production method according to any one of [1] to [5], wherein the transition metal complex is a palladium complex containing palladium and at least one ligand selected from the group consisting of trialkylphosphine, dialkylmonoarylphosphine, monoalkyldiarylphosphine, and triarylphosphine; wherein aryl groups on these phosphines may have each independently 1 to 3 substituents selected from the group consisting of an alkyl group, an alkoxy group, a phenyl group, and a substituted amino group; wherein the phenyl group may have 1 to 3 substituents selected from the group consisting of an alkyl group and an alkoxy group.
[7] The method for producing a polymer compound according to [5] or [6], wherein the crosslinkable group is a group selected from the group consisting of formula (XL-1) and formula (XL-16).
[8] The method for producing a polymer compound according to any one of [1] to [7], wherein the first solvent is an aromatic hydrocarbon solvent, and the second solvent is an alcohol solvent.
[9] The method for producing a polymer compound according to any one of [1] to [8], wherein 20 to 300 parts by weight of the second solvent is used with respect to 100 parts by weight of the solution containing the first solvent and the first polymer compound having a crosslinkable group.
[10] The method for producing a polymer compound according to any one of [1] to [9], comprising, before step (2), a step of adsorbing and purifying the first polymer compound obtained in step (1).

### Advantageous Effects of Invention

According to the method of the present invention, a polymer compound having a crosslinkable group can be produced, the polymer compound having a low content of low-molecular-weight compounds and having sufficiently low polydispersity. Further, the method of the present invention can significantly reduce the polydispersity of crosslinkable-group-containing polymer compounds obtained by polymerization.

### Description of Embodiments

### 1. Explanation of Common Terms

The terms used in the present specification and claims are explained below.

The "halogen atom" refers to a fluorine atom, a chlorine atom, a bromine atom, or an iodine atom.

The "alkyl group" refers to a linear, branched, or cyclic alkyl group. The number of carbon atoms in the liner alkyl group is generally 1 to 50, preferably 3 to 30, and more preferably 4 to 20. The number of carbon atoms in the branched and cyclic alkyl groups is generally 3 to 50, preferably 3 to 30, and more preferably 4 to 20. Examples of the alkyl group include methyl, ethyl, n-propyl, isopropyl, n-butyl, isobutyl, tert-butyl, n-pentyl, isoamyl, 2-ethylbutyl, n-hexyl, cyclohexyl, n-heptyl, cyclohexylmethyl, cyclohexylethyl, n-octyl, 2-ethylhexyl, 3-n-propylheptyl, n-decyl, 3,7-dimethyloctyl, 2-ethyloctyl, 2-n-hexyl-decyl, and n-dodecyl groups.

The "alkyl group" may have a substituent. Examples of the substituent include a halogen atom (particularly a fluorine atom), a cyano group, an aryl group (the aryl group may have 1 to 3 substituents selected from the group consisting of an alkyl group and an alkoxy group), a monovalent heterocyclic group, an alkoxy group, an aryloxy group, a substituted amino group, and the like. The "alkyl group" may have 1 to 20 substituents selected from these substituents. Examples of the substituted alkyl group include trifluoromethyl, pentafluoroethyl, perfluorobutyl, perfluorohexyl, perfluorooctyl, 3-phenylpropyl, 3-(4-methylphenyl)propyl, 3-(3,5-di-n-hexylphenyl)propyl, and 6-ethyloxyhexyl groups.

The "alkylene group" refers to a divalent group obtained by removing one hydrogen atom from the "alkyl group" mentioned above. Examples of the alkylene group include dimethylene and trimethylene groups. The "alkylene group" may have a substituent. Examples of the alkylene group include a halogen atom (particularly a fluorine atom), a cyano group, an aryl group (the aryl group may have 1 to 3 substituents selected from the group consisting of an alkyl group and an alkoxy group), a monovalent heterocyclic group, an alkoxy group, an aryloxy group, a substituted amino group, and the like. The "alkylene group" may have 1 to 20 substituents selected from these substituents.

The "aryl group" refers to a monovalent group obtained by removing, from an aromatic hydrocarbon, one hydrogen atom directly bonded to a carbon atom constituting the ring. The number of carbon atoms in the aryl group is generally 6 to 60, preferably 6 to 20, and more preferably 6 to 10. Examples of the aryl group include phenyl, 1-naphthyl, 2-naphthyl, 1-anthracenyl, 2-anthracenyl, 9-anthracenyl, 1-pyrenyl, 2-pyrenyl, 4-pyrenyl, 2-fluorenyl, 3-fluorenyl, and 4-fluorenyl groups.

The "aryl group" may have a substituent. Examples of the substituent include a halogen atom (particularly a fluorine atom), a cyano group, an alkyl group, an aryl group (the aryl group may have 1 to 3 substituents selected from the group consisting of an alkyl group and an alkoxy group), a monovalent heterocyclic group, an alkoxy group, an aryloxy group, a substituted amino group, and the like. The "aryl group" may have 1 to 10 substituents selected from these substituents. Examples of the substituted aryl group include 2-phenylphenyl, 3-phenylphenyl, and 4-phenylphenyl groups.

The "alkoxy group" refers to a linear, branched, or cyclic alkoxy group. The number of carbon atoms in the linear alkoxy group is generally 1 to 40, and preferably 4 to 10. The number of carbon atoms in the branched and cyclic alkoxy groups is generally 3 to 40, and preferably 4 to 10. Examples of the alkoxy group include methoxy, ethoxy, n-propyloxy, isopropyloxy, n-butyloxy, isobutyloxy, tert-butyloxy, n-pentyloxy, n-hexyloxy, cyclohexyloxy, n-heptyloxy, n-octyloxy, 2-ethylhexyloxy, n-nonyloxy, n-decyloxy, 3,7-dimethyloctyloxy, and lauryloxy groups.

The "alkoxy group" may have a substituent. Examples of the substituent include a halogen atom (particularly a fluorine atom), a cyano group, an aryl group (the aryl group may have 1 to 3 substituents selected from the group consisting of an alkyl group and an alkoxy group), a monovalent heterocyclic group, an alkoxy group, an aryloxy group, a substituted amino group, and the like. The "alkoxy group" may have 1 to 10 substituents selected from these substituents.

The "aryloxy group" refers to a monovalent group obtained by replacing one hydrogen atom directly bonded to a carbon atom constituting the ring of an aromatic hydrocarbon by an oxygen atom. The number of carbon atoms in the aryloxy group is generally 6 to 60, and preferably 7 to 48. Examples of the aryloxy group include phenoxy, 1-naphthyloxy, 2-naphthyloxy, 1-anthracenyloxy, 9-anthracenyloxy, and 1-pyrenyloxy groups.

The "aryl" in the "aryloxy group" may have a substituent. Examples of the substituent include a halogen atom (particularly a fluorine atom), a cyano group, an alkyl group (the aryl group may have 1 to 3 substituents selected from the group consisting of an alkyl group and an alkoxy group), a monovalent heterocyclic group, an alkoxy group, an aryloxy group, a substituted amino group, and the like. The "aryl" may have 1 to 10 substituents selected from these substituents. Examples of the substituted aryloxy group include 2-phenylphenoxy, 3-phenylphenoxy, and 4-phenylphenoxy groups.

The "substituted amino group" refers to an amino group having two substituents. Examples of the substituents include an alkyl group, an aryl group (the aryl group may have 1 to 3 substituents selected from the group consisting of an alkyl group and an alkylene group), and a monovalent cyclic group. Examples of the substituted amino group include dialkylamino, diarylamino, and di(mono or dialkylaryl)amino groups. Specific examples include dimethylamino, diethylamino, diphenylamino, bis(4-methylphenyl)amino, bis(4-tert-butylphenyl)amino, and bis(3,5-di-tert-butylphenyl)amino groups.

The "monovalent aromatic hydrocarbon group" refers to a monovalent group obtained by removing, from an aromatic hydrocarbon, one hydrogen atom directly bonded to a carbon atom constituting the ring. The number of carbon atoms in the aromatic hydrocarbon is generally 6 to 60, preferably 6 to 20, and more preferably 6 to 10. Examples of the monovalent aromatic hydrocarbon group include phenyl, 1-naphthyl, 2-naphthyl, 1-anthracenyl, 2-anthracenyl, 9-anthracenyl, 1-pyrenyl, 2-pyrenyl, 4-pyrenyl, 2-fluorenyl, 3-fluorenyl, and 4-fluorenyl groups.

The "monovalent aromatic hydrocarbon group" may have a substituent. Examples of the substituent include a halogen atom (particularly a fluorine atom), a cyano group, an alkyl group, an aryl group (the aryl group may have 1 to 3 substituents selected from the group consisting of an alkyl group and an alkoxy group), a monovalent heterocyclic group, an alkoxy group, an aryloxy group, a substituted amino group, an alkylene group (dimethylene, trimethylene, etc.), and the like. The "monovalent aromatic hydrocarbon group" may have 1 to 10 substituents selected from these substituents. Examples of the substituted monovalent aromatic hydrocarbon group include 2-phenylphenyl, 3-phenylphenyl, 4-phenylphenyl, and benzocyclobutenyl groups.

The "divalent aromatic hydrocarbon group" refers to a divalent group obtained by removing, from an aromatic hydrocarbon, two hydrogen atoms directly bonded to carbon atoms constituting the ring, or a divalent group in which a plurality of (e.g., 2 to 5) groups selected from the group consisting of the above divalent groups are bonded. The number of carbon atoms in the divalent aromatic hydrocarbon group is generally 6 to 60, preferably 6 to 30, and more preferably 6 to 18. Examples of the divalent aromatic hydrocarbon group include phenylene, naphthalenediyl, anthracenediyl, phenanthrenediyl, dihydrophenanthenediyl, naphthacenediyl, fluorenediyl, pyrenediyl, perylenediyl, and chrysenediyl groups.

The "divalent aromatic hydrocarbon group" may have a substituent. Examples of the substituent include a halogen atom (particularly a fluorine atom), a cyano group, an alkyl group, an aryl group (the aryl group may have 1 to 5 substituents selected from the group consisting of an alkyl group, an alkoxy group, a phenyl group, and an alkylphenyl group), a monovalent heterocyclic group, an alkoxy group, an aryloxy group, a substituted amino group, an alkylene group (dimethylene, trimethylene, etc.), and the like. The divalent aromatic hydrocarbon group may have 1 to 10 substituents selected from these substituents. Examples of the divalent aromatic hydrocarbon group that may have such a substituent include groups represented by formulas (A-1) to (A-20): 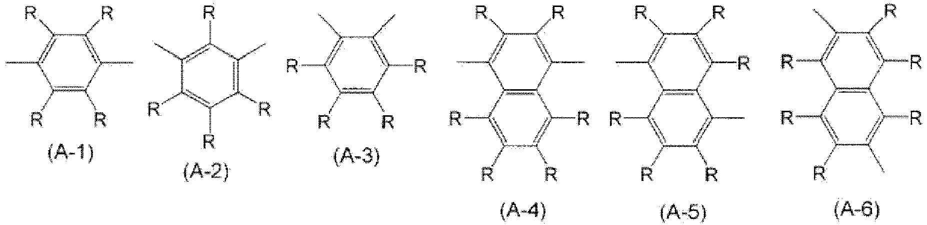 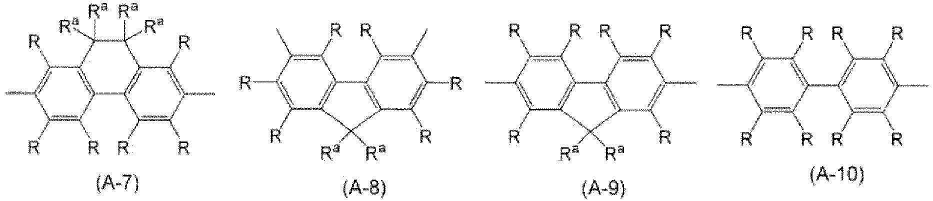 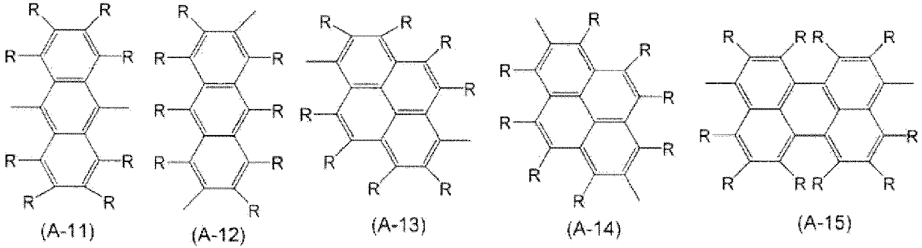 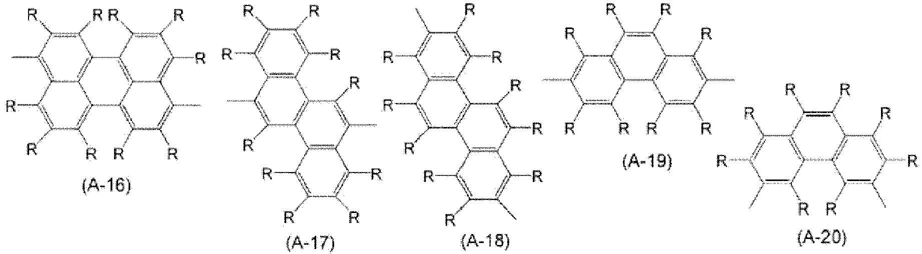 wherein R and R^{a} each independently represent a hydrogen atom, a halogen atom, a cyano group, an alkyl group, an aryl group (the aryl group may have 1 to 5 substituents selected from the group consisting of an alkyl group, an alkoxy group, a phenyl group, and an alkylphenyl group), a monovalent heterocyclic group, an alkoxy group, an aryloxy group, or a substituted amino group; a plurality of R and R^{a} may be the same or different; and adjacent R^{a} may be bonded to each other to form a ring together with the carbon atoms to which they are bonded.

When adjacent R^{a} are bonded to each other to form a ring together with the carbon atoms to which they are bonded, examples of the group in which the two R^{a} are bonded to each other include an alkylene group, a 2,2'-biphenylene group (the 2,2'-biphenylene group may have 1 to 5 alkyl groups), and the like.

The "p-valent heterocyclic group" (p represents an integer of 1 or more; in particular, p is 1 or 2) refers to a p-valent group obtained by removing p-number of hydrogen atoms among hydrogen atoms directly bonded to carbon atoms or heteroatoms constituting the ring of a heterocyclic compound. Preferable among p-valent heterocyclic groups are "p-valent aromatic heterocyclic groups," which are p-valent groups obtained by removing p-number of hydrogen atoms among hydrogen atoms directly bonded to carbon atoms or heteroatoms constituting the ring of an aromatic heterocyclic compound.

Examples of the "aromatic heterocyclic compound" include compounds whose heterocycles themselves are aromatic, such as oxadiazole, thiadiazole, thiazole, oxazole, thiophene, pyrrole, phosphole, furan, pyridine, pyrazine, pyrimidine, triazine, pyridazine, quinoline, isoquinoline, carbazole, dibenzosilole, and dibenzophosphole; compounds whose heterocycles themselves are not aromatic, but are condensed with aromatic rings, such as phenoxazine, phenothiazine, dibenzoborol, dibenzosilol, and benzopyran; and compounds in which a plurality of these compounds are bonded together.

The number of carbon atoms in the "p-valent heterocyclic group" is generally 2 to 60, and preferably 3 to 20.

The "p-valent heterocyclic group" may have a substituent. Examples of the substituent include a halogen atom (particularly a fluorine atom), a cyano group, an alkyl group, an aryl group (the aryl group may have 1 to 5 substituents selected from the group consisting of an alkyl group, an alkoxy group, a phenyl group, and an alkylphenyl group), a monovalent heterocyclic group, an alkoxy group, an aryloxy group, a substituted amino group, an alkylene group (dimethylene, trimethylene, etc.), and the like. The "p-valent heterocyclic group" may have 1 to 10 substituents selected from these substituents.

Examples of the "monovalent heterocyclic group" include thienyl, pyrrolyl, furyl, pyridyl, piperidyl, quinolyl, isoquinolyl, pyrimidinyl, and triazinyl groups.

The "monovalent heterocyclic group" may have a substituent. Examples of the substituent include a halogen atom (particularly a fluorine atom), a cyano group, an alkyl group, an aryl group (the aryl group may have 1 to 5 substituents selected from the group consisting of an alkyl group, an alkoxy group, a phenyl group, and an alkylphenyl group), a monovalent heterocyclic group, an alkoxy group, an aryloxy group, a substituted amino group, an alkylene group (dimethylene, trimethylene, etc.), and the like. The monovalent heterocyclic group may have 1 to 5 substituents selected from these substituents.

Examples of the "divalent heterocyclic group" include a divalent group obtained by removing two hydrogen atoms among hydrogen atoms directly bonded to carbon atoms or heteroatoms constituting the ring of an aromatic heterocyclic compound (e.g., pyridine, diazabenzene, triazine, azanaphthalene, diazanaphthalene, carbazole, dibenzofuran, dibenzothiophene, dibenzosilole, phenoxazine, phenothiazine, acridine, dihydroacridine, furan, thiophene, azole, diazole, triazole, oxazole, oxadiazole, thiazole, or thiadiazole), and a divalent group in which a plurality of (e.g., 2 to 4) groups selected from the group consisting of the above divalent groups are bonded.

The "divalent heterocyclic group" may have a substituent. Examples of the substituent include a halogen atom (particularly a fluorine atom), a cyano group, an alkyl group, an aryl group (the aryl group may have 1 to 5 substituents selected from the group consisting of an alkyl group, an alkoxy group, a phenyl group, and an alkylphenyl group), a monovalent heterocyclic group, an alkoxy group, an aryloxy group, a substituted amino group, an alkylene group (dimethylene, trimethylene, etc.), and the like. The divalent heterocyclic group may have 1 to 5 substituents selected from these substituents. Preferable examples of the divalent heterocyclic group that may have such a substituent include groups represented by formulas (A-21) to (A-52): 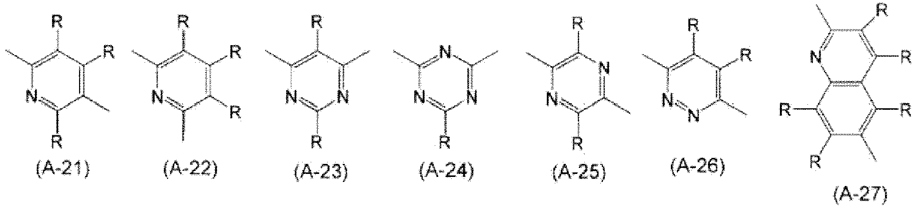 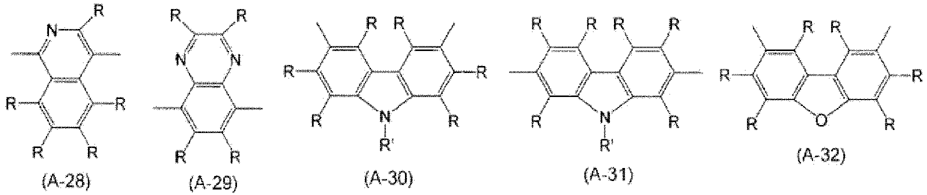 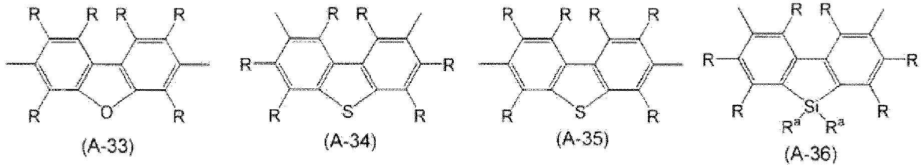 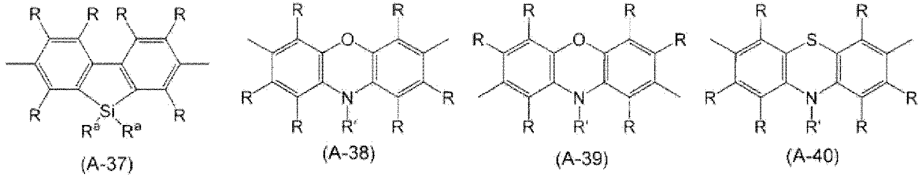 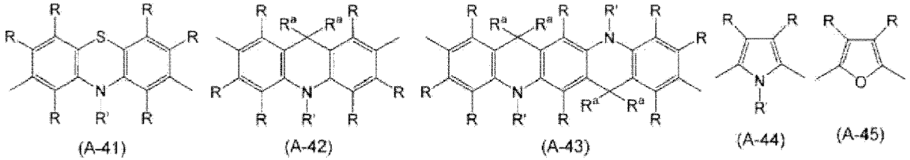 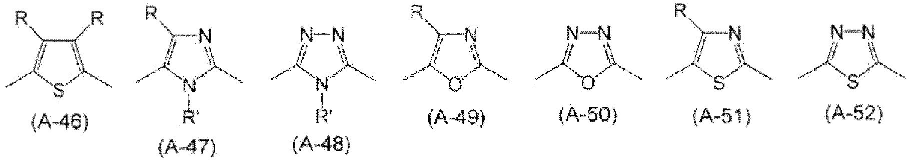 wherein R and R^{a} have the same meanings as described above; R' represents an alkyl group, an aryl group (the aryl group may have 1 to 5 substituents selected from the group consisting of an alkyl group, an alkoxy group, a phenyl group, and an alkylphenyl group), or a monovalent heterocyclic group; when there are a plurality of R', they may be the same or different.

The "group in which a divalent aromatic hydrocarbon group and a divalent heterocyclic group are bonded" refers to a divalent group in which one or more of the above-described divalent aromatic hydrocarbon groups, and one or more of the above-described divalent heterocyclic groups are bonded in any way. Examples of the divalent aromatic hydrocarbon group and the divalent heterocyclic group include those described above.

The "group in which a divalent aromatic hydrocarbon group and a divalent heterocyclic group are bonded" may have a substituent. Some or all of the divalent aromatic hydrocarbon group as a partial structure and/or some or all of the divalent heterocyclic groups may have 1 to 10 substituents selected from the group consisting of a halogen atom, a cyano group, an alkyl group, an aryl group (the aryl group may have 1 to 5 substituents selected from the group consisting of an alkyl group, an alkoxy group, a phenyl group, and an alkylphenyl group), a monovalent heterocyclic group, an alkoxy group, an aryloxy group, a substituted amino group, and an alkylene group, as described above. Further, the divalent heterocyclic group as the other partial structure may have 1 to 5 substituents selected from the group consisting of a halogen atom, a cyano group, an alkyl group, an aryl group (the aryl group may have 1 to 5 substituents selected from the group consisting of an alkyl group, an alkoxy group, a phenyl group, and an alkylphenyl group), a monovalent heterocyclic group, an alkoxy group, an aryloxy group, a substituted amino group, and an alkylene group, as described above.

### 2. Method for Producing Polymer Compound

Next, the method for producing a polymer compound of the present embodiment is described.

The method for producing a polymer compound having a crosslinkable group of the present invention comprises the steps of:
(1) polymerizing a monomer component in a solvent in the presence of a transition metal complex to thereby obtain a first polymer compound having a crosslinkable group, wherein the monomer component comprises a monomer having a crosslinkable group; and
(2) mixing a solution containing a first solvent and the first polymer compound with a second solvent, followed by separation into two or more layers, and selecting a layer containing a polymer compound having the largest polystyrene-equivalent weight average molecular weight to thereby obtain a second polymer compound having a crosslinkable group, wherein the first solvent contains a solvent of the same kind as the solvent used in step (1), the second solvent is a poor solvent for the first polymer compound, and the solvent contained in each of the two or more layers is substantially an organic solvent.

### 2.1. Step (1)

Step (1) is a step of polymerizing a monomer component comprising a monomer having a crosslinkable group in a solvent in the presence of a transition metal complex to thereby obtain a first polymer compound having a crosslinkable group.

In step (1), it is preferable to reduce the oxygen concentration in a reaction vessel by inert gas substitution, and then polymerize a monomer component comprising a monomer having a crosslinkable group. After the start of the polymerization reaction, at least one member selected from the group consisting of a transition metal complex, a solvent, and a monomer component comprising a monomer having a crosslinkable group may be further added, if necessary, to the reaction system.

In step (1), a base and a phase transfer catalyst may be used, if necessary, to promote the reaction.

### Transition Metal Complex

The transition metal complex is used as a catalyst for polymerization (coupling reaction) of a monomer component comprising a monomer having a crosslinkable group. Specifically, the transition metal complex is used as a catalyst for polymerizing a compound represented by formula (1) and a compound represented by formula (2) to each other. The transition metal complex is preferably a Group 10 transition metal complex, and more preferably a palladium complex. The Group 10 transition metal complex is preferably a zerovalent Group 10 transition metal complex or a divalent Group 10 transition metal complex, and more preferably a divalent Group 10 transition metal complex. The palladium complex may be a homogeneous palladium complex or a heterogeneous palladium complex, and preferably a homogeneous palladium complex.

The ligand of the transition metal complex is not particularly limited, as long as it can coordinate to a transition metal (in particular, palladium). Examples of ligands include ligands having atoms or atomic groups, such as nitrogen atom, phosphorus atom, oxygen atom, sulfur atom, carbon-carbon unsaturated bond, carbene, carbon monoxide, and halogen atom. A monodentate ligand or a polydentate ligand (bidentate ligand, tridentate ligand, etc.) may be used. Preferable among these is a phosphine ligand; more preferable are a trialkylphosphine ligand, a dialkylmonoarylphosphine ligand, a monoalkyldiarylphosphine ligand, and a triarylphosphine ligand; and even more preferable are a dialkylarylphosphine ligand and a triarylphosphine ligand. The aryl groups on these phosphine ligands may have each independently 1 to 3 substituents selected from the group consisting of an alkyl group, an alkoxy group, a phenyl group (the phenyl group may have 1 to 3 substituents selected from the group consisting of an alkyl group and an alkoxy group), and a substituted amino group.

The transition metal complex is preferably a palladium complex. Specific examples include dichlorobis(triphenylphosphine)palladium, dichlorobis(tricyclohexylphosphine)palladium, dichlorobis[tris(2-methylphenyl)phosphine]palladium, dichlorobis[tris(2-methoxyphenyl)phosphine]palladium, dichlorobis[dicyclopentyl(2-methylphenyl)phosphine]palladium, dichlorobis[dicyclopentyl(2,6-dimethylphenyl)phosphine]palladium, dichlorobis[dicyclopentyl(2-methoxyphenyl)phosphine]palladium, dichlorobis[dicyclopentyl(2,6-dimethoxyphenyl)phosphine]palladium, dichlorobis[di-tert-butyl(4-tert-butylphenyl)phosphine]palladium, dichlorobis[di-tert-butyl (3,5-di-tert-butylphenyl)phosphine]palladium, palladium acetate, dichlorobis(2-dicyclohexylphosphino-2',6'-dimethoxybiphenyl)palladium, dichlorobis(2-dicyclohexylphosphino-2',4',6'-triisopropylbiphenyl)palladium, dichlorobis(2-di-tert-butylphosphino-2' ,4' ,6'-triisopropylbiphenyl)palladium, dichlorobis(1,1'-diphenylphosphinoferrocene)palladium, dichlorobis[di-tert-butyl(4-dimethylaminophenyl)phosphine]palladium, [tetrakis(triphenylphosphine)]palladium, dichloro[1,3-bis(2,6-diisopropylphenyl)imidazol-2-ylidene](3-chloropyridyl)palladium, dichloro[1,3-bis(2,6-di-3-pentylphenyl)imidazol-2-ylidene](3-chloropyridyl)palladium, [tris(dibenzylideneacetone)]dipalladium, and the like.

The transition metal complexes may be used singly or in combination of two or more.

Further, these transition metal complexes can be allowed to coexist with ligands that are different from the ligands of these complexes, such as triphenylphosphine, tri(tert-butylphosphine), tricyclohexylphosphine, 1,3-bis(diphenylphosphino)propane, 1,1'-bis(diphenylphosphino)ferrocene, and bipyridyl, to form new transition metal (e.g., palladium) complexes in the reaction system.

### Solvent

The solvent used in step (1) is not particularly limited, as long as it can dissolve the first polymer compound having a crosslinkable group to be generated, i.e., a good solvent for the first polymer compound.

The solvent (good solvent for the first polymer compound) can be selected from various solvents according to the characteristics of the first polymer compound. Specifically, it can be defined as a solvent having a solubility (20°C) of the first polymer compound of 1 g/100 g or more.

Examples of solvents include aromatic hydrocarbon solvents, such as toluene, xylene, mesitylene, cyclohexylbenzene, and tetralin; ether solvents, such as tetrahydrofuran, 1,4-dioxane, dimethoxyethane, and anisole; amide solvents, such as N, N-dimethylacetamide, N,N-dimethylformamide, and N-methyl-2-pyrrolidone; alcohol solvents, such as methanol, ethanol, ethylene glycol, isopropyl alcohol, propylene glycol, ethylene glycol monomethyl ether, and ethylene glycol monobutyl ether; ketone solvents, such as acetone, methyl ethyl ketone, cyclopentanone, cyclohexanone, methyl amyl ketone, and methyl isobutyl ketone; aliphatic hydrocarbon solvents, such as pentane, hexane, and heptane; nitrile solvents, such as acetonitrile; halogenated hydrocarbon solvents, such as chloroform; ester solvents, such as methyl acetate and ethyl acetate; and the like. The solvents may be used singly or in combination of two or more, and may be further used together with water.

Preferable among these solvents are aromatic hydrocarbon solvents and ether solvents, and more preferable are aromatic hydrocarbon solvents.

The number of carbon atoms in the aromatic hydrocarbon solvent is preferably 6 to 12, and more preferably 7 to 9. The aromatic hydrocarbon solvent is preferably toluene, xylene, or mesitylene.

The ether solvent may be any of linear, branched, and cyclic ether solvents, but is preferably a cyclic ether solvent. The number of carbon atoms in the ether solvent is preferably 4 to 7. The ether solvent is preferably tetrahydrofuran.

The amount of the solvent used is generally 100 to 100000 g, and preferably 500 to 20000 g, per mol of the total amount of the monomer components as raw materials.

### Base

The base is not particularly limited, as long as it promotes the coupling reaction (polymerization reaction) in step (1). The base may be an inorganic base or an organic base, and is preferably an organic base. The bases may be used singly or in combination of two or more.

Examples of inorganic bases include alkali metal carbonates, such as sodium carbonate and potassium carbonate; alkali metal hydroxides, such as sodium hydroxide and potassium hydroxide; and alkali metal phosphates, such as potassium phosphate.

Examples of organic bases include tetraalkylammonium hydroxide, tetraalkylammonium carbonate, tetraalkylammonium dicarbonate, 1,5-diazabicyclo[4.3.0]non-5-ene, 1,8-diazabicyclo[5.4.0]undec-7-ene, 1,4-diazabicyclo[2.2.2]octane, dimethylaminopyridine, pyridine, trialkylamine, tetraalkylammonium fluoride, and the like. Preferable are tetraalkylammonium hydroxide, tetraalkylammonium carbonate, tetraalkylammonium dicarbonate, and tetraalkylammonium fluoride; more preferable are tetraalkylammonium hydroxide, tetraalkylammonium carbonate, and tetraalkylammonium dicarbonate; and even more preferable is tetraalkylammonium hydroxide.

Examples of tetraalkylammonium hydroxide include tetramethylammonium hydroxide, tetraethylammonium hydroxide, tetrapropylammonium hydroxide, benzyltrimethylammonium hydroxide, tetrabutylammonium hydroxide, phenyltrimethylammonium hydroxide, (C₅H₁₁)₄NOH, (C₁₆H₃₃)(CH₃)₃NOH, (C₁₆H₃₃)(CH₃)₃NOH, (C₈H₁₇)₃(CH₃)NOH, (C₈H₁₇)₂(C₁₀H₂₁)(CH₃)NOH, (C₈H₁₇) (C₁₀H₂₁)₂(CH₃)NOH, (C₁₀H₂₁)₃(CH₃)NOH, (C₈H₁₇)₄NOH, benzyltriethylammonium hydroxide, and the like.

Examples of tetraalkylammonium carbonate include tetramethylammonium carbonate, tetraethylammonium carbonate, tetrapropylammonium carbonate, benzyltrimethylammonium carbonate, tetrabutylammonium carbonate, phenyltrimethylammonium hydroxide, and the like.

Examples of tetraalkylammonium dicarbonate include tetramethylammonium bicarbonate, tetraethylammonium bicarbonate, tetrapropylammonium bicarbonate, benzyltrimethylammonium bicarbonate, tetrabutylammonium bicarbonate, phenyltrimethylammonium bicarbonate, and the like.

The amount of the base used is generally 0.5 mol to 100 mol, preferably 0.5 mol to 75 mol, and more preferably 0.5 mol to 50 mol, per mol of the total amount of the monomer components as raw materials.

### Phase Transfer Catalyst

Examples of phase transfer catalysts include ammonium salt compounds, phosphonium salt compounds, macrocyclic polyethers, and the like; ammonium salt compounds are preferable. The phase transfer catalysts may be used singly or in combination of two or more.

Examples of ammonium salt compounds include tetrabutylammonium fluoride, tetrabutylammonium chloride, tetrabutylammonium bromide, tetrabutylammonium iodide, tetrapentylammonium fluoride, tetrapentylammonium chloride, tetrapentylammonium bromide, tetrapentylammonium iodide, (C₁₆H₃₃)(CH₃)₃NCl, (C₈H₁₇)₃(CH₃)NCl, (C₈H₁₇)₂(C₁₀H₂₁)(CH₃)NCl, (C₈H₁₇)(C₁₀H₂₁)₂(CH₃)NCl, (C₁₀H₂₁)₃(CH₃)NCl, (C₈H₁₇)₄NBr, benzyltriethylammonium chloride, cetylpyridinium chloride, and the like; tetrabutylammonium bromide and tetrapentylammonium bromide are preferable.

The amount of the phase transfer catalyst used is generally 0.001 mol to 50 mol, preferably 0.005 mol to 10 mol, and more preferably 0.01 mol to 1 mol, per mol of the total amount of the monomer components as raw materials.

### Reaction Conditions in Step (1)

In step (1), it is preferable to create an inert gas atmosphere in a reaction vessel to reduce the oxygen concentration, and then polymerize a monomer component comprising a monomer having a crosslinkable group.

The oxygen concentration during reaction is preferably 0.5% by volume or less, more preferably 0.2% by volume or less, and even more preferably 0.05% by volume or less.

The reaction temperature is generally -100°C to 200°C, preferably 0°C to 150°C, and more preferably 50°C to 100°C.

The reaction time is generally 1 to 96 hours, and preferably 2 to 48 hours. The reaction pressure is generally atmospheric pressure.

In the polymerization reaction, the reaction system is preferably stirred. The stirring power is generally 0.001 kW/m³ to 10 kW/m³, and preferably 0.01 kW/m³ to 2 kW/m³.

### Monomer Component

The "monomer component comprising a monomer having a crosslinkable group" as a raw material used in the reaction of step (1) refers to one or more monomers, including a monomer having a crosslinkable group, and further including, if necessary, other monomers having no crosslinkable group.

The "monomer component comprising a monomer having a crosslinkable group" preferably has two reactive groups capable of polymerization (coupling) in the molecule. Examples of the reactive groups include X¹ and X² in compounds represented by formulas (1) and (2), respectively. These reactive groups are typical reactive groups used in the Suzuki coupling reaction.

The "crosslinkable group" refers to a group capable of further crosslinking, with heat, ultraviolet rays, or the like, a polymer compound obtained by polymerizing the above "monomer component comprising a monomer having a crosslinkable group."

Examples of the "monomer component comprising a monomer having a crosslinkable group" include a compound represented by formula (1) and a compound represented by formula (2). The compound represented by formula (1) and the compound represented by formula (2) each may contain one or more (in particular, 2 to 5) compounds. 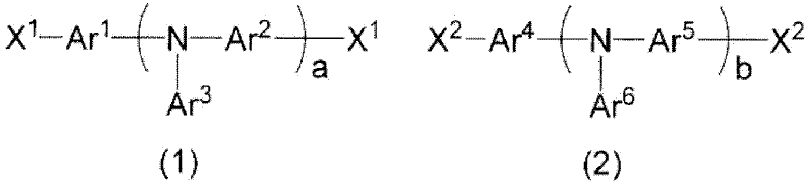 wherein Ar¹, Ar², Ar³, Ar⁴, Ar⁵, Ar⁶, X¹, X², a, and b are as defined above.

Ar¹, Ar², Ar⁴, and Ar⁵ are each independently preferably a divalent aromatic hydrocarbon group or a group in which a divalent aromatic hydrocarbon group and a divalent heterocyclic group are bonded. These groups may have a substituent.

The divalent aromatic hydrocarbon groups represented by Ar¹, Ar², Ar⁴, and Ar⁵ are preferably groups represented by formula (A-1), (A-6), (A-7), (A-9) to (A-11) or (A-19); more preferably groups represented by formula (A-1) or (A-9); and more preferably groups represented by formula (A-9).

The divalent heterocyclic groups represented by Ar¹, Ar², Ar⁴, and Ar⁵ are preferably groups represented by formula (A-21), (A-22), (A-24) or (A-27) to (A-46); and more preferably groups represented by formula (A-21), (A-22), or (A-24).

Examples of the groups in which a divalent aromatic hydrocarbon group and a divalent heterocyclic group are bonded, represented by Ar¹, Ar², Ar⁴, and Ar⁵, include groups represented by the following formulas. These groups may have a substituent.

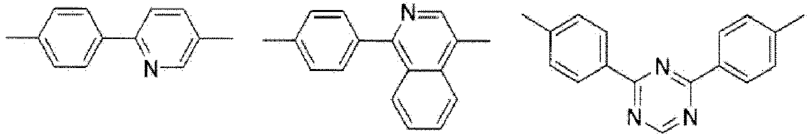

Ar³ and Ar⁶ are each independently preferably a monovalent aromatic hydrocarbon group. These groups may have a substituent.

a and b are each independently preferably an integer of 0 to 2, and more preferably 0 or 1.

In at least one of the compound represented by formula (1) and the compound represented by formula (2), a or b is preferably 1 or 2.

X¹ is preferably a bromine atom, an iodine atom, or -O-S(=O)₂R^{a1} (R^{a1} is as defined above); and more preferably a bromine atom.

Examples of the group represented by -O-S(=O)₂R^{a1} include a methanesulfonyloxy group, an ethanesulfonyloxy group, a trifluoromethanesulfonyloxy group, a p-toluenesulfonyloxy group, and the like.

Examples of the borane residue represented by X² include a group represented by formula (G-1):

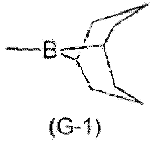

Examples of the boric acid ester residue represented by X² include groups represented by formulas (G-2) to (G-11), and preferably groups represented by formula (G-4) or (G -5):

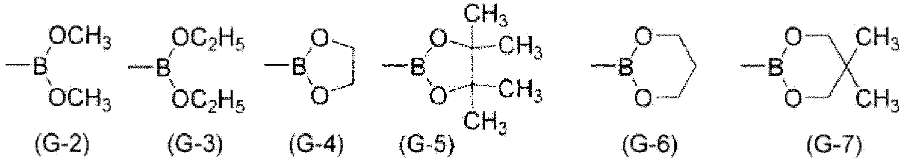

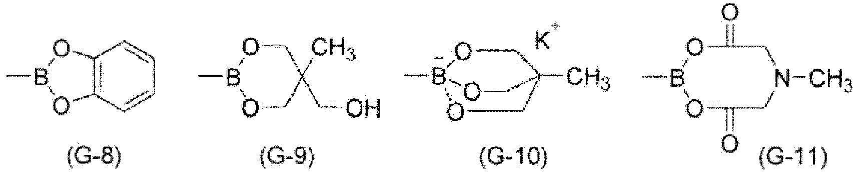

X² is preferably a boric acid ester residue.

At least one of Ar¹, Ar², Ar³, Ar⁴, Ar⁵, and Ar⁶ has a group containing a crosslinkable group as a substituent. Among Ar¹ to Ar⁶, the number of those having a group containing a crosslinkable group is generally 1 to 5, and preferably 1 to 3.

Examples of the group containing a crosslinkable group include a group represented by formula (5):

-L-(̵Y)ₙ (5)

wherein L is each independently a single bond, or -(CH₂)-, -O-, - S-, -(CO)-, -(C₆H₄)-, or a divalent group in which two or more groups selected from these groups are bonded; provided that -O- and -O-, -S- and -S-, and -O- and -S- are not directly bonded to each other; Y represents a crosslinkable group; and n represents an integer of 1 to 5.

L is, for example, -(CH₂)ₘ-, -(CH₂)ₚ-(C₆H₄)-(CH₂)_{q}-, - (CH₂)ᵣ-O-(CH₂)ₛ-, -(CH₂)ₜ-(C₆H₄)-O-(CH₂)ᵤ-, or the like. Here, m represents an integer of 0 to 20, p represents an integer of 0 to 10, q represents an integer of 0 to 10, r represents an integer of 0 to 10, s represents an integer of 0 to 10, t represents an integer of 0 to 10, and u represents an integer of 0 to 10.

L is preferably -(CH₂)ₘ- (m is an integer of 0 to 10), - (CH₂)ₚ-(C₆H₄)-(CH₂)_{q}- (p is an integer of 0 to 5, and q is an integer of 0 to 10), or -(CH₂)ᵣ-O-(CH₂)ₛ- (r is an integer of 0 to 5, and s is an integer of 0 to 10).

n is preferably an integer of 1 or 2, and more preferably 1.

The crosslinkable group represented by Y is not particularly limited, as long as it is a group capable of crosslinking the polymer compound. Specifically, a group selected from the following group A of crosslinkable groups is preferable. Group A of crosslinkable groups: 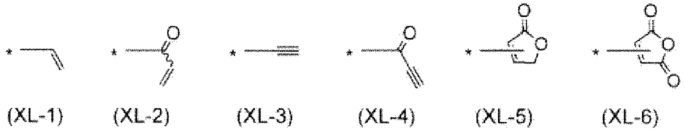 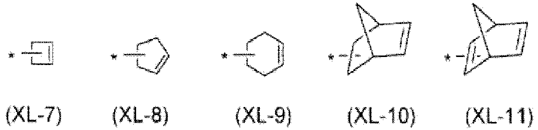 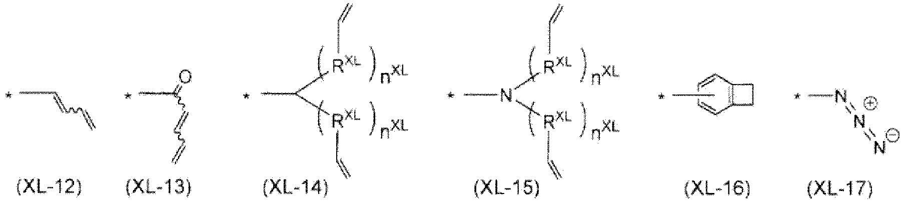 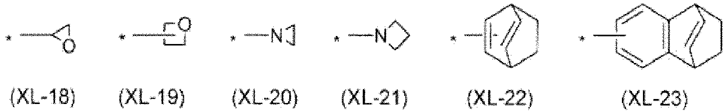 wherein each of these groups may have a substituent selected from the group consisting of an alkyl group and an aryl group; R^{XL} represents -(CH₂)-, -O-, -S-, -(CO)-, or a divalent group in which two or more groups selected from these groups are bonded; provided that -O- and -O-, -S- and -S-, and -O- and -S- are not directly bonded to each other; n^{XL} represents an integer of 0 to 5; when there are a plurality of R^{XL}, they may be the same or different; when there are a plurality of n^{XL}, they may be the same or different; and * is a binding site with L.

Preferable among group A of crosslinkable groups are groups represented by formulas (XL-1), (XL-7) to (XL-16), (XL-18), (XL-19), (XL-22), and (XL-23); more preferable are groups represented by formulas (XL-1), (XL-10), (XL-12), (XL-16), (XL-18), and (XL-19); even more preferable are groups represented by formulas (XL-1), (XL-16), and (XL-19); and particularly preferable are groups represented by formulas (XL-1) and (XL-16).

Specific examples of the monomer having a crosslinkable group include compounds having structures represented by the following formulas (2-1) to (2-31) and (2'-1) to (2'-9); and preferably compounds having structures represented by the following formulas (2-1) to (2-30) and (2'-1) to (2'-9). These may have a substituent. These structures are represented as divalent groups obtained by removing the reactive groups (X¹ and X²) from the compound represented by formula (1) and the compound represented by formula (2), respectively.

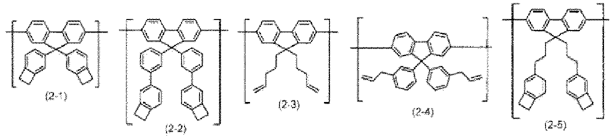

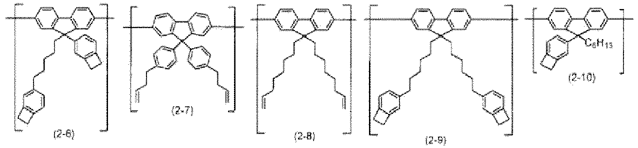

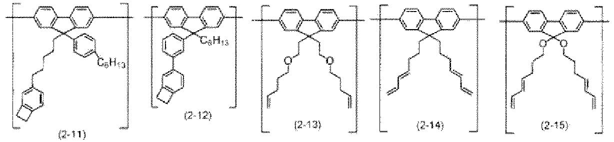

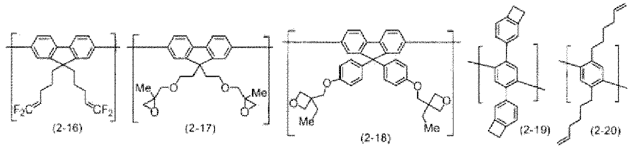

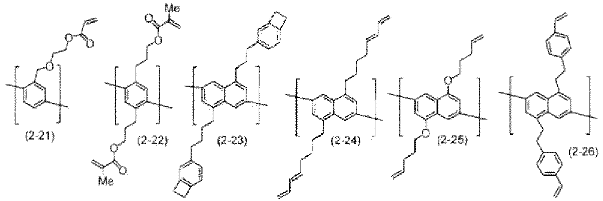

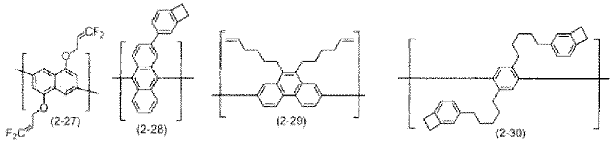

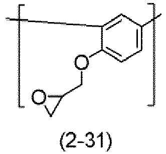

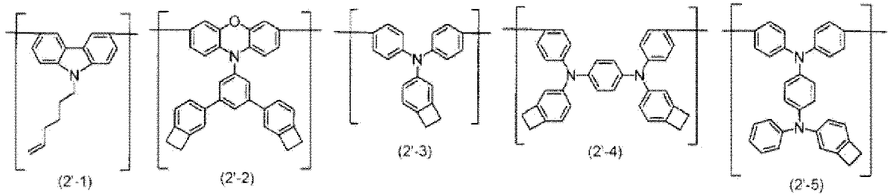

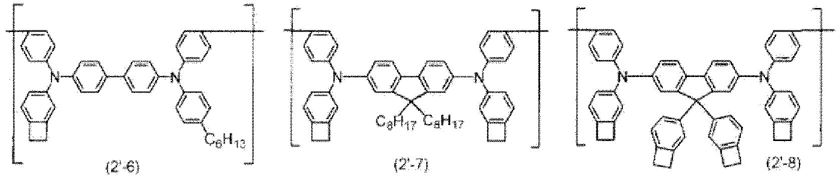

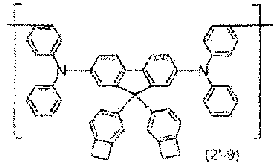

Specific examples of other monomers having no crosslinkable group include compounds having structures represented by the following formulas (1-11) to (1-46) and (X1-1) to (X1-16). These may have a substituent. These structures are represented as divalent groups obtained by removing the reactive groups (X¹ and X²) from the compound represented by formula (1) and the compound represented by formula (2), respectively.

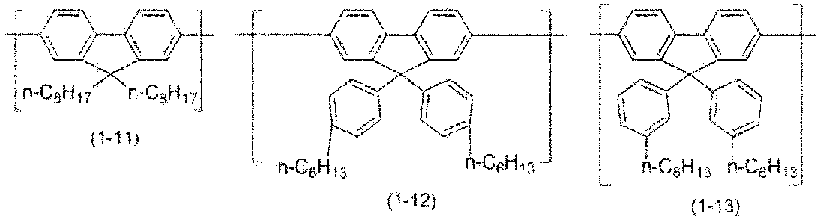

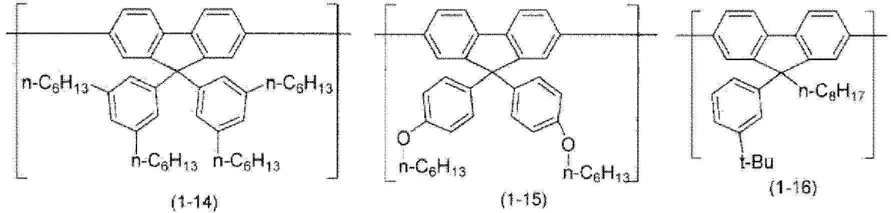

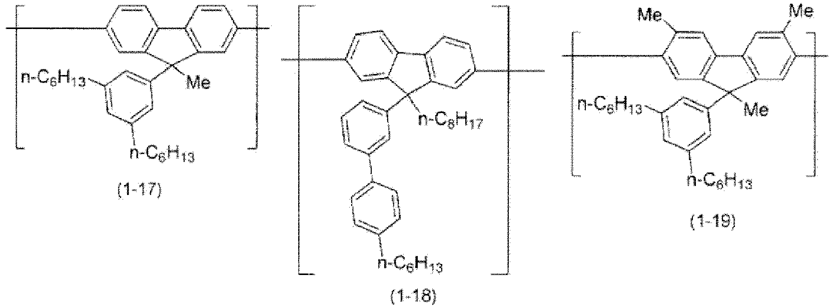

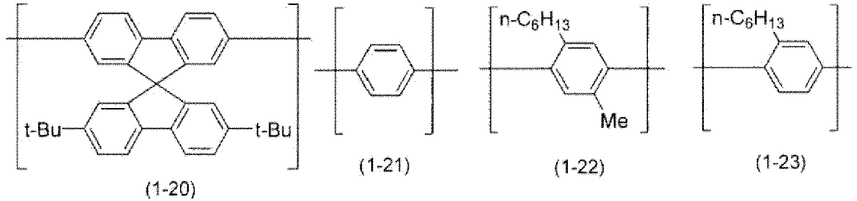

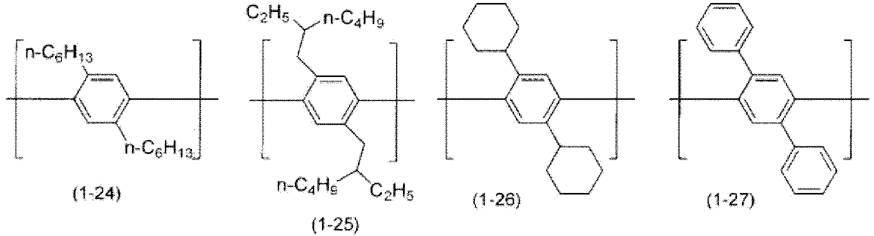

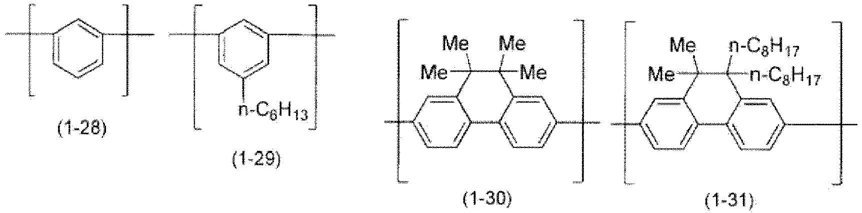

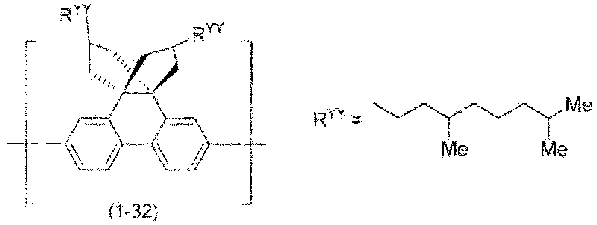

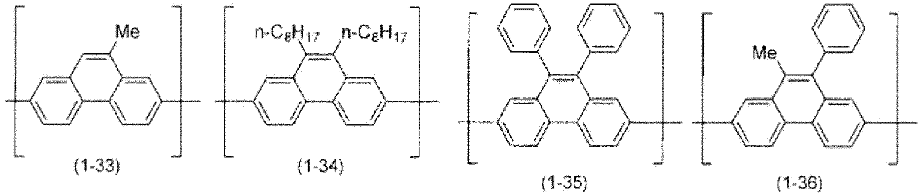

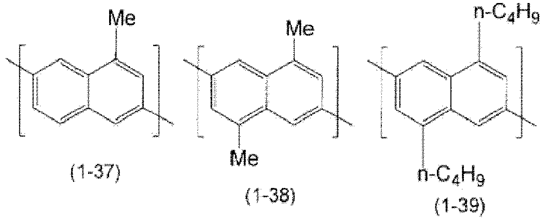

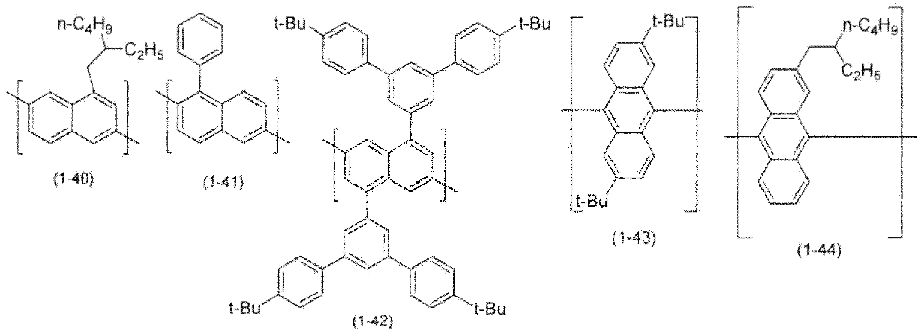

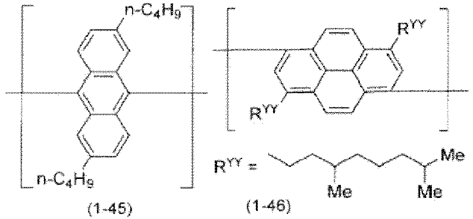

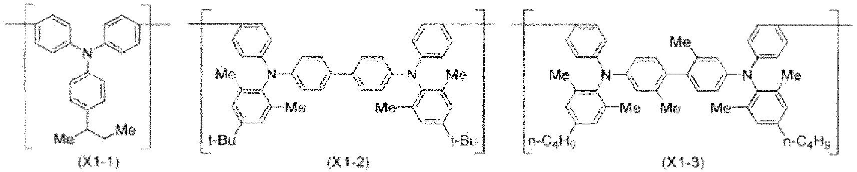

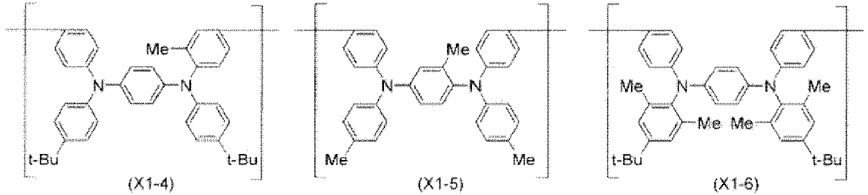

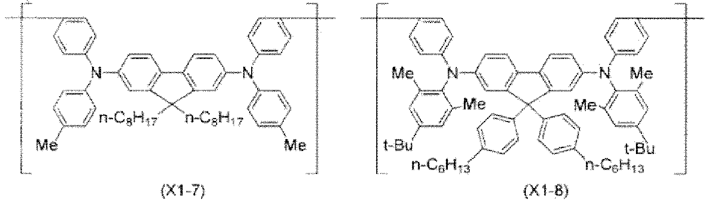

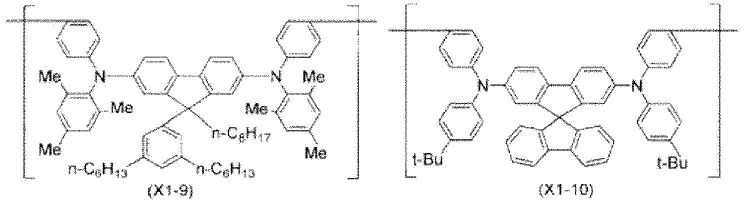

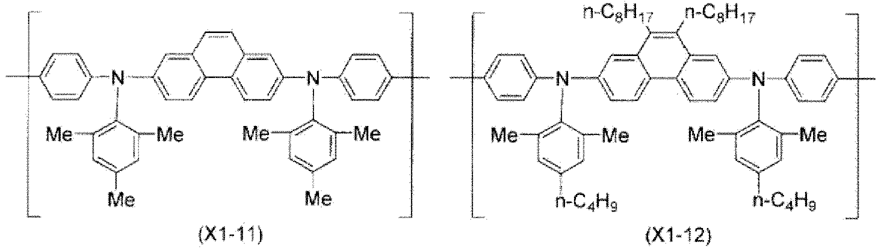

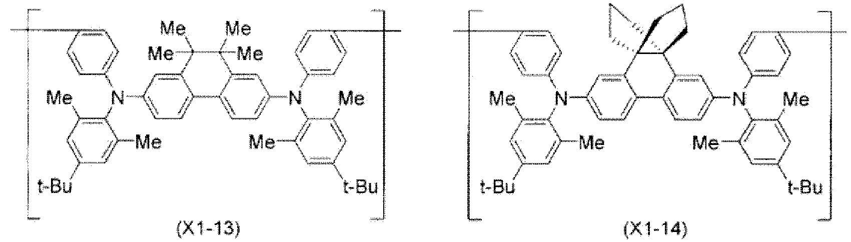

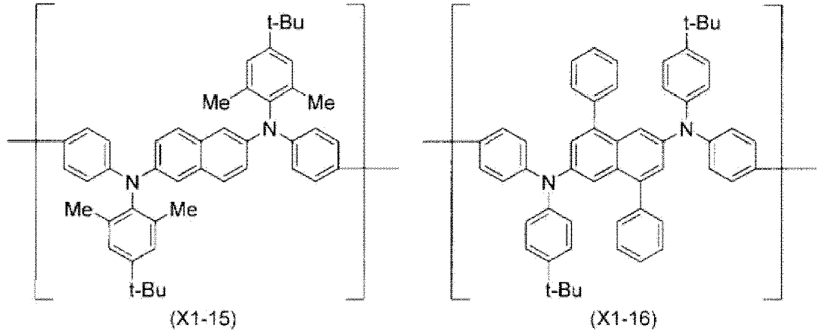

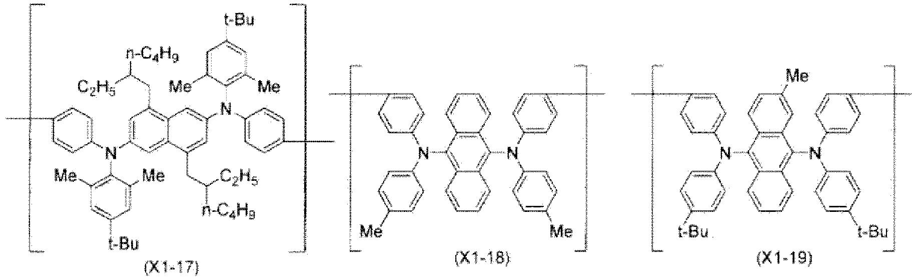

The ratio of the monomer having a crosslinkable group in the total monomer components as raw materials is preferably 1 to 90 mol, more preferably 5 to 50 mol, and even more preferably 8 to 25 mol, with respect to 100 mol of the total monomer components.

The ratio of the crosslinkable group in the total monomer components as raw materials is generally 1 to 180 mol, preferably 5 to 100 mol, and more preferably 8 to 50 mol, with respect to 100 mol of the total monomer components.

### First Polymer Compound

The first polymer compound includes both a compound obtained by polymerizing only a monomer having a crosslinkable group, and a compound obtained by polymerizing a monomer having a crosslinkable group and other monomers. Preferable among these is a compound obtained by polymerizing a monomer having a crosslinkable group and other monomers.

Specific examples include a polymer compound containing a constitutional unit represented by formula (3) and a constitutional unit represented by formula (4), obtained by polymerization (e.g., Suzuki coupling reaction) of a compound represented by formula (1) and a compound represented by formula (2). 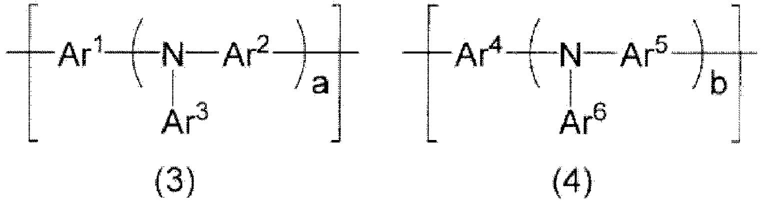 wherein Ar¹, Ar², Ar³, Ar⁴, Ar⁵, Ar⁶, X¹, X², a, and b are as defined above.

The first polymer compound contains, for example, one or more constitutional units represented by formula (3), and one or more constitutional units represented by formula (4).

The first polymer compound obtained in step (1) generally contains low-molecular-weight polymers, depending on the polymerization (e.g., Suzuki coupling reaction) conditions, and the polydispersity thereof tends to increase. For example, the polystyrene-equivalent weight average molecular weight (Mw) of the first polymer compound is generally 3 × 10⁴ to 3 × 10⁵, and preferably 3 × 10⁴ to 2 × 10⁵. The polydispersity thereof is generally 3 to 100, and preferably 3 to 15.

The weight average molecular weight (Mw), number average molecular weight (Mn), and polydispersity (Mw/Mn) can be measured and calculated according to the molecular weight analysis described in the Examples.

### 2.2. Step (2)

Step (2) is a step of mixing a solution containing a first solvent and the first polymer compound with a second solvent, which is a poor solvent for the first polymer compound, followed by separation into two or more layers, and selecting a layer containing a polymer compound having the largest polystyrene-equivalent weight average molecular weight to thereby obtain a second polymer compound having a crosslinkable group.

Here, the first solvent contains a solvent of the same kind as that used in step (1), and the solvent contained in each of the two or more layers is substantially an organic solvent.

### First Solvent

The first solvent contains a solvent of the same kind as that used in step (1), and this solvent is preferably a solvent that can dissolve the first polymer compound (good solvent). As the first solvent, a solvent that is a good solvent for the first polymer compound can be selected from the solvents used in step (1). The first solvents may be used singly or in combination of two or more, and may contain water. Preferable among these are aromatic hydrocarbon solvents and ether solvents, and more preferable are aromatic hydrocarbon solvents.

The number of carbon atoms in the aromatic hydrocarbon solvent is preferably 6 to 12, and more preferably 7 to 9. The aromatic hydrocarbon solvent is preferably toluene, xylene, or mesitylene.

The ether solvent may be a linear, branched, or cyclic ether solvent, but is preferably a cyclic ether solvent. The number of carbon atoms in the ether solvent is preferably 4 to 7. The ether solvent is preferably tetrahydrofuran.

In a more preferred embodiment, for example, the solvent used in step (1) is directly used for the first solvent in step (2). This simplifies the operation because the solvent used in step (1) can be directly used in step (2), without distilling off the solvent and taking the first polymer compound after step (1). In particular, this method is extremely efficient for implementation on a large scale.

The first solvent is preferably substantially an organic solvent. For example, the amount of the organic solvent in the first solvent is, for example, 80 wt% or more, more preferably 90 wt% or more, and particularly preferably 100 wt%.

The amount of the first solvent in the solution containing the first solvent and the first polymer compound subjected to step (2) is generally 10 to 1000 parts by weight, and preferably 50 to 300 parts by weight, per part by weight of the total amount of the first polymer compound.

The solution containing the first solvent and the first polymer compound subjected to step (2) is preferably subjected to adsorption and purification. Examples of the adsorbent used include alumina and silica gel. Specifically, impurities are removed by treating the first polymer compound with an adsorbent, and the fractionation operation (layer separation) in step (2) can be smoothly performed.

### Second Solvent

The second solvent is a poor solvent for the first polymer compound.

The second solvent can be selected from various solvents, depending on the characteristics of the first polymer compound. Specifically, it can be defined as a solvent having a solubility (20°C) of the first polymer compound of less than 1 g/100 g. Moreover, the second solvent is preferably one capable of dissolving low-molecular-weight compounds having a low degree of polymerization contained in the first polymer compound obtained in step (1).

As the second solvent, a poor solvent for the first polymer compound can be selected and used. The second solvents may be used singly or in combination of two or more, and may contain water.

Examples of the second solvent include amide solvents, alcohol solvents, ketone solvents, aliphatic hydrocarbon solvents, ester solvents, and nitrile solvents; alcohol solvents are preferable. The amide solvent is, for example, N-methyl-2-pyrrolidone. The alcohol solvent is preferably an alcohol solvent having 1 to 6 carbon atoms, and more preferably methanol, ethanol, or isopropanol. The ketone solvent is preferably a ketone solvent having 3 to 6 carbon atoms, and more preferably acetone or methyl ethyl ketone. The ester solvent is preferably an ester solvent having 3 to 6 carbon atoms, and more preferably methyl acetate or ethyl acetate. Preferable among these are methanol, ethanol, isopropanol, acetone, and ethyl acetate; and more preferable is methanol.

The second solvent is preferably substantially an organic solvent. For example, the amount of the organic solvent in the second solvent is, for example, 80 wt% or more, preferably 90 wt% or more, and particularly preferably 100 wt%.

### Operation Procedure of Step (2)

In step (2), the solution containing the first solvent and the first polymer compound is mixed with the second solvent, and then stirred and allowed to stand to separate it into two or more layers (liquid layers); and a layer containing a polymer compound having the largest weight average molecular weight is selected. As a result, it is possible to obtain a second polymer compound having a crosslinkable group having a larger weight average molecular weight and low polydispersity.

The amount of the second solvent used is preferably 5 parts by weight or more, more preferably 10 parts by weight or more, and even more preferably 20 parts by weight or more, as well as preferably 1000 parts by weight or less, more preferably 800 parts by weight or less, even more preferably 500 parts by weight or less, and particularly preferably 300 parts by weight or less, with respect to 100 parts by weight of the solution containing the first solvent and the first polymer compound having a crosslinkable group.

The temperature of the solution when the second solvent is added is preferably -30°C or higher, more preferably 0°C or higher, and even more preferably 10°C or higher. Moreover, the temperature of the solution is preferably 60°C or less, more preferably 40°C or less, and even more preferably 30°C or less.

When the second solvent is added, stirring is preferably performed, and the stirring power is generally 0.001 kW/m³ to 10 kW/m³, preferably 0.01 kW/m³ to 2 kW/m³, and more preferably 0.1 kW/m³ to 1 kW/m³.

The standing time for separation into two or more layers is generally 10 minutes or more, preferably 1 hour to 48 hours, and more preferably 1 hour to 24 hours.

The standing temperature for separation into two or more layers is preferably -30°C or higher, more preferably 0°C or higher, and even more preferably 10°C or higher. Moreover, the standing temperature is preferably 60°C or less, more preferably 40°C or less, and even more preferably 30°C or less.

In step (2), separation into two or more layers (liquid layers) is important. If solids are precipitated here, a second polymer compound having low polydispersity cannot be obtained (see, for example, Comparative Example 1). Therefore, the fractionation step in step (2) is completely different from a crystallization step of mixing a solution in which a polymer compound is dissolved with a poor solvent to precipitate solids. The operation of separation into two or more liquid layers can be performed by appropriately adjusting the types and amounts of the first solvent and second solvent according to the characteristics of the first polymer compound.

In all of the two or more separated layers, the entire solvent contained in each layer is substantially an organic solvent. The term "substantially" used herein means that 80 wt% or more, further 90 wt% or more, and particularly 95 wt% or more, of the entire solvent contained in each layer is an organic solvent.

Each layer separated by the above operation is fractionated, the weight average molecular weight of the polymer compound contained in each layer is measured, and a layer containing a polymer compound having the largest weight average molecular weight is obtained. In general, among the separated layers, a layer containing a polymer compound having the largest weight average molecular weight tends to be separated into a lower layer, and a layer containing a polymer compound having a smaller weight average molecular weight tends to be separated into an upper layer. Therefore, a desired second polymer compound can be generally obtained by separating the lower layer.

In step (2), the above fractionation operation can be repeated, as necessary. A second polymer compound having less polydispersity can thereby be obtained.

### Second Polymer Compound

The second polymer compound obtained by the fractionation operation in step (2) is basically a compound containing a constitutional unit represented by formula (3) and a constitutional unit represented by formula (4), as with the first polymer compound. However, because low-molecular-weight compounds are removed by the fractionation operation in step (2), the second polymer compound has a higher weight average molecular weight and significantly less polydispersity than the first polymer compound.

The polystyrene-equivalent weight average molecular weight (Mw) of the second polymer compound is generally 7 × 10⁴ to 6 × 10⁶, preferably 7 × 10⁴ to 3 × 10⁵, and more preferably 1 × 10⁵ to 3 × 10⁵. The polydispersity (Mw/Mn) thereof is generally 1 to 20, preferably 1 to 3, and more preferably 1.1 to 2.5.

### 2.3. Other Steps

Step (1) and step (2) described above may be consecutive steps, or other steps may be provided between both steps. Further, other steps may be provided after step (2). Examples of other steps include a step of capping the end of the first polymer compound obtained in step (1), a liquid separation step, an azeotropic dehydration step, a purification step, and the like.

The end capping step is a step of adding a monofunctional compound to the reaction liquid after the completion of the reaction in step (1) (i.e., after the termination of the growth of the molecular weight of the first polymer compound) to cap (substitute) the reactive end group of the first polymer compound with the monofunctional compound.

Here, the phrase "the termination of the growth of the molecular weight of the first polymer compound" means that when the weight average molecular weight is measured at 30-minute intervals during reaction, the change in weight average molecular weight is 3% or less, compared with the weight average molecular weight of 30 minutes before. The weight average molecular weight can be measured using the method described in the Examples.

The reactive end group of the first polymer compound after the completion of the reaction corresponds to a group represented by X¹ or X² derived from the monomer components as raw materials represented by formula (1) and formula (2). For example, X¹ is a halogen atom (chlorine atom, bromine atom, iodine atom, etc.), -O-S(= O)₂R^{a1}, or the like; and X² is -B(OH)₂, a borane residue, a boric acid ester residue, or -BF₃T (wherein R^{a1} and T are as defined above).

Examples of the monofunctional compound to be added include compounds having one reactive group capable of capping the reactive end group of the first polymer compound by the Suzuki coupling reaction. When the reactive end group of the first polymer compound is X¹, the monofunctional compound is a compound having one reactive group X²; and when the reactive end group of the first polymer compound is X², the monofunctional compound is a compound having one reactive group X¹. Specific examples of the monofunctional compound include a compound in which reactive group X¹ or X² and an aryl group are bonded, a compound in which reactive group X¹ or X² and a heterocyclic group are bonded, and the like. More specific examples include phenylboronic acid, phenyl bromide, and the like.

Other examples of the monofunctional compound include a compound in which an aryl group or a monovalent heterocyclic group, each of which has a crosslinkable group selected from the above group A of crosslinkable groups, and reactive group X¹ or X² are bonded; a compound in which a group represented by formula (XL-16) and reactive group X¹ or X² are bonded; and the like.

For the polymer compound in which the reactive end group of the first polymer compound is capped, a desired second polymer compound having a capped reactive end group can be obtained by fractionation in the same manner as in step (2) described above.

The liquid separation step is a step of mixing the reaction liquid containing the first polymer compound with at least one of an acidic aqueous solution such as hydrochloric acid, a basic aqueous solution such as ammonia aqueous solution, water, saline, etc.; separating the resulting mixture into an aqueous layer and an organic layer; and obtaining the organic layer containing the desired first polymer compound. This step is a step of extracting an organic substance containing the first polymer compound from the reaction liquid, followed by washing. It should be noted that this step is completely different from step (2) of the present invention, i.e., the fractionation step of removing low-molecular-weight compounds to obtain a desired second polymer compound.

The azeotropic dehydration step is a step of azeotropically dehydrating the solution containing the first polymer compound at normal pressure or reduced pressure.

The purification step is, for example, a step of purifying the first polymer compound by reprecipitation, continuous extraction with a Soxhlet extractor, or column chromatography; a crystallization step; adsorption and purification (a step of treatment with an adsorbent); or the like. The purification step can be carried out using any known method. The purification step may be provided after step (2).

Typical examples of a series of steps for producing the second polymer compound from the monomer component in the present invention include "step (1)"/end capping step/liquid separation step/dehydration step/column chromatography step/"step (2)," "step (1)"/end capping step/liquid separation step/column chromatography step/"step (2)," "step (1)"/end capping step/liquid separation step/"step (2)," and the like.

### Examples

The present invention is described in more detail below with reference to Examples. However, the present invention is not limited to these Examples.

### Molecular weight analysis

The polystyrene-equivalent weight average molecular weight (Mw), polystyrene-equivalent number average molecular weight (Mn), and polydispersity (Mw/Mn) of polymer compounds were determined by gel permeation chromatography (GPC).

### Analysis conditions

Measuring device: HLC-8320GPC (produced by Tosoh Corporation)
Column: PLgel 10 µm MIXED-B (produced by Tosoh Corporation)

Column temperature: 40°C
Mobile phase: tetrahydrofuran
Flow rate: 0.5 mL/min
Detection wavelength: 228 nm

### Example 1

### Polymerization Step: Step (1)

After an inert gas atmosphere was created in a reaction vessel, compound (M1) (20.26 mmol), compound (M2) (18.01 mmol), compound (M3) (2.25 mmol), compound (M4) (2.25 mmol), dichlorobis[tris(2-methoxyphenyl)phosphine]palladium (0.0135 mmol), and toluene (165.1 g) were added. Thereafter, the oxygen concentration in the reaction vessel was adjusted to less than 0.01 volume% and the resulting mixture was heated to 80°C. Subsequently, a 20 wt% tetraethylammonium hydroxide aqueous solution (124.3 g) was added thereto and the resulting mixture was stirred for 3 hours. Then, the compound (M1) (0.80 mmol) was added and the resulting mixture was stirred for 3 hours. Further, the compound (M1) (0.80 mmol) was added and the resulting mixture was stirred for 2 hours. Further, the compound (M1) (0.19 mmol) was added and the resulting mixture was stirred for 2 hours to obtain a crude product of a first polymer compound. The crude product of the first polymer compound had Mn of 2.8 × 10⁴, Mw of 9.5 × 10⁴, and polydispersity of 3.7.

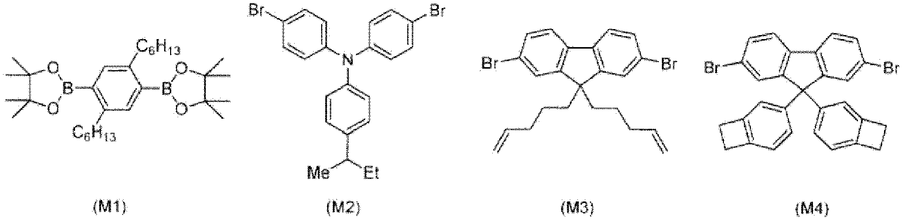

### End Capping Step

Phenylboronic acid (2.25 mmol) was added to the reaction liquid after completion of the polymerization, and the resulting mixture was stirred for 5 hours.

### Liquid Separation Step

The reaction liquid was cooled to room temperature, diluted with toluene (1074.3 g), and separated into phases, followed by washing with ion-exchanged water (372 g) 3 times.

### Dehydration Step

The obtained toluene solution was depressurized to 18 kPa and heated to 65°C to remove water under reflux.

### Column Step

The obtained toluene solution was passed through a column containing a mixture of alumina and silica gel for adsorption and purification to thereby obtain a toluene solution containing 1000.2 g of a first polymer compound (P1). The first polymer compound (P1) had Mn of 2.8 × 10⁴, Mw of 9.6 × 10⁴, and polydispersity of 3.4.

### Fractionation Step: Step (2)

Methanol (149.5 g) was added dropwise to the obtained toluene solution of the first polymer compound (P1) (553.7 g) (27 parts by weight of methanol per 100 parts by weight of the toluene solution) and stirring was continued at a stirring power of 0.3 kW/m³ for 1 hour. The obtained mixture was allowed to stand at 22°C for 17.5 hours and thereby separated into two layers. The lower layer, having a large polystyrene-equivalent weight average molecular weight, was separated. The separated lower layer was diluted with toluene (310.5 g) to obtain a second polymer compound (P2). The second polymer compound (P2) had Mn of 6.1 × 10⁴, Mw of 1.3 × 10⁵, and polydispersity of 2.1.

### Crystallization Step

The obtained toluene solution of the second polymer compound (P2) was added dropwise to methanol (2117 g) and stirring was continued for 1 hour. The obtained solid was then collected by filtration and dried to obtain a polymer compound (P3). The polymer compound (P3) had Mn of 6.3 × 10⁴, Mw of 1.3 × 10⁵, and polydispersity of 2.1.

### Example 2

### Fractionation Step: Step (2)

39 parts by weight of ethanol were added dropwise to 100 parts by weight of the toluene solution of the first polymer compound (P1) obtained in the column step of Example 1, and the resulting mixture was stirred. The obtained mixture was allowed to stand at 23°C for 2.5 hours and thereby separated into two layers. The lower layer, having a large polystyrene-equivalent weight average molecular weight, was separated. The separated lower layer was diluted with toluene to obtain a second polymer compound (P4). The polymer compound (P4) had Mn of 8.8 × 10⁴, Mw of 1.7 × 10⁵, and polydispersity of 2.0.

### Example 3

### Fractionation Step: Step (2)

60 parts by weight of isopropanol were added dropwise to 100 parts by weight of the toluene solution of the first polymer compound (P1) obtained in the column step of Example 1, and the resulting mixture was stirred. The obtained mixture was allowed to stand at 23°C for 20 hours and thereby separated into two layers. The lower layer, having a large polystyrene-equivalent weight average molecular weight, was separated. The separated lower layer was diluted with toluene to obtain a second polymer compound (P5). The polymer compound (P5) had Mn of 6.8 × 10⁴, Mw of 1.3 × 10⁵, and polydispersity of 2.0.

### Example 4

### Fractionation Step: Step (2)

90 parts by weight of acetone were added dropwise to 100 parts by weight of the toluene solution of the first polymer compound (P1) obtained in the column step of Example 1, and the resulting mixture was stirred. The obtained mixture was allowed to stand at 23°C for 20 hours and thereby separated into two layers. The lower layer, having a large polystyrene-equivalent weight average molecular weight, was separated. The separated lower layer was diluted with toluene to obtain a second polymer compound (P6). The polymer compound (P6) had Mn of 8.3 × 10⁴, Mw of 1.5 × 10⁵, and polydispersity of 1.8.

### Example 5

### Fractionation Step: Step (2)

254 parts by weight of ethyl acetate were added dropwise to 100 parts by weight of the toluene solution of the first polymer compound (P1) obtained in the column step of Example 1, and the resulting mixture was stirred. The obtained mixture was allowed to stand at 23°C for 20 hours and thereby separated into two layers. The lower layer, having a large polystyrene-equivalent weight average molecular weight, was separated. The separated lower layer was diluted with toluene to obtain a second polymer compound (P7). The polymer compound (P7) had Mn of 1.3 × 10⁵, Mw of 2.1 × 10⁵, and polydispersity of 1.6.

### Comparative Example 1

### Crystallization Step

The toluene solution (277.0 g) of the first polymer compound (P1) obtained in the column step of Example 1 was added dropwise to methanol (1802 g) without being subjected to a fractionation step, and the resulting mixture was stirred for 1 hour. The obtained solid was collected by filtration and dried to obtain a polymer compound (P8). The polymer compound (P8) had Mn of 3.0 × 10⁴, Mw of 9.6 × 10⁴, and polydispersity of 3.2.

This result confirmed that the polydispersity of the polymer compound obtained by crystallization without being subjected to a fractionation step is almost the same as the polydispersity of the polymer compound after the column step.

### Comparative Example 2

### Fractionation Step: Step (2)

50 parts by weight of xylene were added dropwise to 100 parts by weight of the toluene solution of the first polymer compound (P1) obtained in the column step of Example 1, and the resulting mixture was stirred. The obtained mixture was allowed to stand at 23°C for 24 hours, but did not separate into two layers. The polymer compound (P22) in the mixed solution of toluene and xylene had Mn of 2.8 × 10⁴, Mw of 9.6 × 10⁴, and polydispersity of 3.4.

### Comparative Example 3

### Fractionation Step: Step (2)

50 parts by weight of tetrahydrofuran were added dropwise to 100 parts by weight of the toluene solution of the first polymer compound (P1) obtained in the column step of Example 1, and the resulting mixture was stirred. The obtained mixture was allowed to stand at 23°C for 24 hours, but did not separate into two layers. The polymer compound (P23) in the mixed solution of toluene and tetrahydrofuran had Mn of 2.6 × 10⁴, Mw of 9.5 × 10⁴, and polydispersity of 3.6.

The results of Comparative Examples 2 and 3 showed that even when a good solvent was added in the fractionation step, the resulting mixture did not separate into two layers. The results thus confirmed that the polydispersity of the obtained polymer compound was almost the same as the polydipsersity of the polymer compound after the column step.

### Example 6

### Polymerization Step: Step (1)

After an inert gas atmosphere was created in a reaction vessel, compound (M1) (18.96 mmol), compound (M2) (7.98 mmol), compound (M3) (2.00 mmol), compound (M4) (2.00 mmol), compound (M5) (7.98 mmol), bis[di-tert-butyl(4-dimethylaminophenyl)phosphine]dichloropalladium (0.0100 mmol), tetrabutylammonium bromide (643.7 mg), and xylene (168.3 g) were added. Thereafter, the oxygen concentration was adjusted to less than 0.01% by volume, and the resulting mixture was heated to 80°C. Subsequently, a 15 wt% tetramethylammonium hydroxide aqueous solution (101.4 g) was added thereto and the resulting mixture was stirred for 2 hours to obtain a crude product of a first polymer compound. The crude product of the first polymer compound had Mn of 1.2 × 10⁴, Mw of 1.0 × 10⁵, and polydispersity of 8.4.

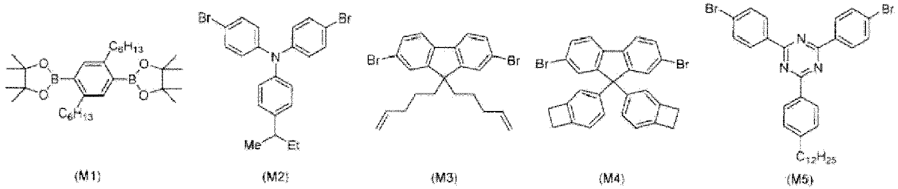

### End Capping Step

Phenylboronic acid (9.97 mmol) was added to the reaction liquid after completion of the polymerization, and the resulting mixture was stirred for 8 hours.

### Liquid Separation Step

The reaction liquid was cooled to room temperature, diluted with xylene (1061.0 g), and separated into phases, followed by washing with ion-exchanged water (372 g) 3 times.

### Dehydration Step

The obtained xylene solution was depressurized to 18 kPa and heated to 65°C to remove water under reflux.

### Column Step

The obtained xylene solution was passed through a column containing a mixture of alumina and silica gel for adsorption and purification to thereby obtain a xylene solution of a first polymer compound (P9). The polymer compound (P9) had Mn of 1.1 × 10⁴, Mw of 9.9 × 10⁴, and polydispersity of 8.7.

### Fractionation Step: Step (2)

24 parts by weight of methanol were added dropwise to 100 parts by weight of the obtained xylene solution of the first polymer compound (P9), and the resulting mixture was stirred at 23°C. The obtained mixture was allowed to stand at 23°C for 1.5 hours and thereby separated into two layers. The lower layer, having a large polystyrene-equivalent weight average molecular weight, was separated. The separated lower layer was diluted with xylene to obtain a second polymer compound (P10). The second polymer compound (P10) had Mn of 5.3 × 10⁴, Mw of 1.2 × 10⁵, and polydispersity of 2.3.

### Example 7

### Fractionation Step: Step (2)

40 parts by weight of ethanol was added dropwise to 100 parts by weight of the xylene solution of the first polymer compound (P9) obtained in the column step of Example 6, and the resulting mixture was stirred. The resulting mixture was then allowed to stand at 23°C for 1.5 hours and thereby separated into two layers. The lower layer, having a large polystyrene-equivalent weight average molecular weight, was separated and diluted with xylene to obtain a second polymer compound (P11). The polymer compound (P11) had Mn of 5.1 × 10⁴, Mw of 1.2 × 10⁵, and polydispersity of 2.3.

### Example 8

### Fractionation Step: Step (2)

46 parts by weight of isopropanol were added dropwise to 100 parts by weight of the xylene solution of the first polymer compound (P9) obtained in the column step of Example 6, and the resulting mixture was stirred. The obtained mixture was allowed to stand at 23°C for 2 hours and thereby separated into two layers. The lower layer, having a large polystyrene-equivalent weight average molecular weight, was separated. The separated lower layer was diluted with xylene to obtain a second polymer compound (P12). The polymer compound (P12) had Mn of 6.6 × 10⁴, Mw of 1.5 × 10⁵, and polydispersity of 2.3.

### Example 9

### Fractionation Step: Step (2)

65 parts by weight of acetone were added dropwise to 100 parts by weight of the xylene solution of the first polymer compound (P9) obtained in the column step of Example 6, and the resulting mixture was stirred. The obtained mixture was allowed to stand at 23°C for 2 hours and thereby separated into two layers. The lower layer, having a large polystyrene-equivalent weight average molecular weight, was separated. The separated lower layer was diluted with xylene to obtain a second polymer compound (P13). The polymer compound (P13) had Mn of 7.2 × 10⁴, Mw of 1.8 × 10⁵, and polydispersity of 2.5.

### Example 10

### Fractionation Step: Step (2)

150 parts by weight of ethyl acetate were added dropwise to 100 parts by weight of the xylene solution of the first polymer compound (P9) obtained in the column step of Example 6, and the resulting mixture was stirred. The obtained mixture was allowed to stand at 23°C for 3 hours and thereby separated into two layers. The lower layer, having a large polystyrene-equivalent weight average molecular weight, was separated. The separated lower layer was diluted with xylene to obtain a second polymer compound (P14). The polymer compound (P14) had Mn of 7.6 × 10⁴, Mw of 1.6 × 10⁵, and polydispersity of 2.2.

### Example 11

### Fractionation Step: Step (2)

161 parts by weight of N-methyl-2-pyrrolidone were added dropwise to 100 parts by weight of the xylene solution of the first polymer compound (P9) obtained in the column step of Example 6, and the resulting mixture was stirred. The obtained mixture was allowed to stand at 23°C for 22 hours and thereby separated into two layers. The lower layer, having a large polystyrene-equivalent weight average molecular weight, was separated. The separated lower layer was diluted with xylene to obtain a second polymer compound (P15). The polymer compound (P15) had Mn of 8.1 × 10⁴, Mw of 1.7 × 10⁵, and polydispersity of 2.1.

### Example 12

### Fractionation Step: Step (2)

24 parts by weight of methanol were added dropwise to 100 parts by weight of the xylene solution of the first polymer compound (P9) obtained in the column step of Example 6, and the resulting mixture was stirred. The obtained mixture was allowed to stand at 10°C for 3 hours and thereby separated into two layers. The lower layer, having a large polystyrene-equivalent weight average molecular weight, was separated. The separated lower layer was diluted with xylene to obtain a second polymer compound (P16). The polymer compound (P16) had Mn of 5.0 × 10⁴, Mw of 1.2 × 10⁵, and polydispersity of 2.4.

### Example 13

### Fractionation Step: Step (2)

24 parts by weight of methanol were added dropwise to 100 parts by weight of the xylene solution of the first polymer compound (P9) obtained in the column step of Example 6, and the resulting mixture was stirred. The obtained mixture was allowed to stand at 35°C for 3 hours and thereby separated into two layers. The lower layer, having a large polystyrene-equivalent weight average molecular weight, was separated. The separated lower layer was diluted with xylene to obtain a second polymer compound (P17). The polymer compound (P17) had Mn of 5.1 × 10⁴, Mw of 1.2 × 10⁵, and polydispersity of 2.4.

### Example 14

### Polymerization Step: Step (1)

After an inert gas atmosphere was created in a reaction vessel, compound (M6) (5.00 mmol), compound (M2) (4.75 mmol), compound (M7) (0.28 mmol), potassium carbonate (25 mmol), tetrahydrofuran (75 g), and water (12.5 g) were added. Thereafter, the oxygen concentration in the reaction vessel was adjusted to less than 0.01% by volume, and the resulting mixture was heated to 80°C. Subsequently, [tris(dibenzylideneacetone)]dipalladium (0.100 mmol) and tri-tert-butylphosphonium tetrafluoroborate (0.400 mmol) were added thereto, and the resulting mixture was stirred for 3 hours to obtain a crude product of a first polymer compound.

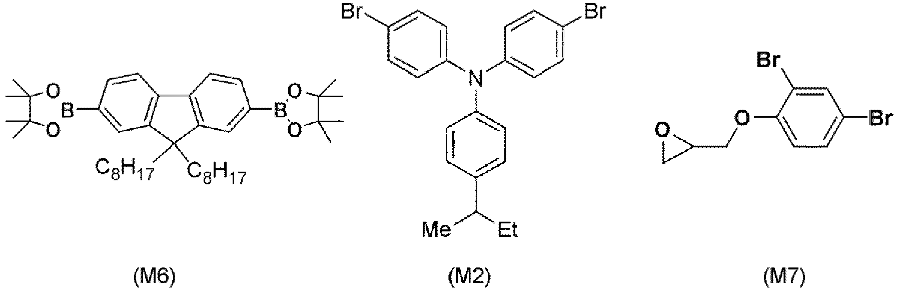

### Liquid Separation Step

The reaction liquid was cooled to room temperature, diluted with toluene (264.7 g), and separated into phases, followed by washing with ion-exchanged water (90 g) 3 times.

### Column Step

The obtained mixed solution of tetrahydrofuran and toluene was passed through a column containing a mixture of alumina and silica gel for adsorption and purification to thereby obtain a mixed solution containing 282.8 g of a first polymer compound (P18) in tetrahydrofuran and toluene. The first polymer compound (P18) had Mn of 4.4 × 10³, Mw of 2.7 × 10⁵, and polydispersity of 61.3.

### Fractionation Step: Step (2)

20 parts by weight of methanol were added dropwise to 100 parts by weight of the obtained mixed solution containing the first polymer compound (P18) in tetrahydrofuran and toluene, and the resulting mixture was stirred. The obtained mixture was allowed to stand at 23°C for 1.5 hours and thereby separated into two layers. The lower layer, having a large polystyrene-equivalent weight average molecular weight, was separated. The separated lower layer was diluted with toluene to obtain a second polymer compound (P19). The second polymer compound (P19) had Mn of 2.4 × 10⁴, Mw of 3.4 × 10⁵, and polydispersity of 13.9.

### Example 15

### Fractionation Step: Step (2)

16 parts by weight of methanol were added dropwise to 100 parts by weight of the mixed solution of tetrahydrofuran and toluene containing the first polymer compound (P18) obtained in the column step of Example 14, and the resulting mixture was stirred. The obtained mixture was allowed to stand at 23°C for 1.5 hours and thereby separated into two layers. The lower layer, having a large polystyrene-equivalent weight average molecular weight, was separated. The separated lower layer was diluted with toluene to obtain a second polymer compound (P20). The second polymer compound (P20) had Mn of 2.8 × 10⁴, Mw of 5.3 × 10⁵, and polydispersity of 18.9.

### Example 16

### Fractionation Step: Step (2)

100 parts by weight of ethyl acetate were added dropwise to 100 parts by weight of the mixed solution of tetrahydrofuran and toluene containing the first polymer compound (P18) obtained in the column step of Example 14, and the resulting mixture was stirred. The obtained mixture was allowed to stand at 23°C for 1.5 hours and thereby separated into two layers. The lower layer, having a large polystyrene-equivalent weight average molecular weight, was separated. The separated lower layer was diluted with toluene to obtain a second polymer compound (P21). The second polymer compound (P21) had Mn of 3.3 × 10⁴, Mw of 4.9 × 10⁵, and polydispersity of 14.7.

**Table 1**

| | Change in polydispersity before and after the operation of step (2) |
|---|---|
| Example 1 | 3.4 (P1) → 2.1 (P2) |
| Example 2 | 3.4 (P1) → 2.0 (P4) |
| Example 3 | 3.4 (P1) → 2.0 (P5) |
| Example 4 | 3.4 (P1) → 1.8 (P6) |
| Example 5 | 3.4 (P1) → 1.6 (P7) |
| Comp. Ex. 1 | 3.4 (P1) → 3.2 (P8) |
| Comp. Ex. 2 | 3.4 (P1) → 3.4 (P22) |
| Comp. Ex. 3 | 3.4 (P1) → 3.6 (P23) |
| Example 6 | 8.7 (P9) → 2.3 (P10) |
| Example 7 | 8.7 (P9) → 2.3 (P11) |
| Example 8 | 8.7 (P9) → 2.3 (P12) |
| Example 9 | 8.7 (P9) → 2.5 (P13) |
| Example 10 | 8.7 (P9) → 2.2 (P14) |
| Example 11 | 8.7 (P9) → 2.1 (P15) |
| Example 12 | 8.7 (P9) → 2.4 (P16) |
| Example 13 | 8.7 (P9) → 2.4 (P17) |
| Example 14 | 61.3 (P18) → 13.9 (P19) |
| Example 15 | 61.3 (P18) → 18.9 (P20) |
| Example 16 | 61.3 (P18) → 14.7 (P21) |

As shown in Table 1, the results clarified that the fractionation operation in step (2) can significantly reduce the polydispersity of the polymer compounds.

## Claims

1. A method for producing a polymer compound having a crosslinkable group, the method comprising the steps of:
(1) polymerizing a monomer component in a solvent in the presence of a transition metal complex to thereby obtain a first polymer compound having a crosslinkable group, wherein the monomer component comprises a monomer having a crosslinkable group; and
(2) mixing a solution containing a first solvent and the first polymer compound with a second solvent, followed by separation into two or more layers, and selecting a layer containing a polymer compound having the largest polystyrene-equivalent weight average molecular weight to thereby obtain a second polymer compound having a crosslinkable group, wherein the first solvent contains a solvent of the same kind as the solvent used in step (1), the second solvent is a poor solvent for the first polymer compound, and the solvent contained in each of the two or more layers is substantially an organic solvent.

2. The method for producing a polymer compound according to claim 1, wherein the monomer component comprises a compound represented by formula (1) and a compound represented by formula (2), and
the first polymer compound and the second polymer compound are each a polymer compound containing a constitutional unit represented by formula (3) and a constitutional unit represented by formula (4): 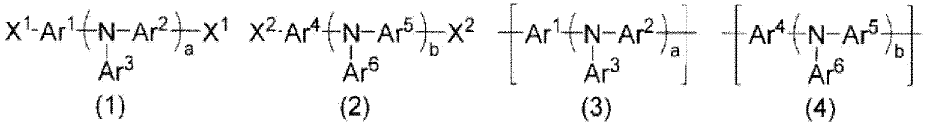
wherein a and b each independently represent an integer of 0 to 2;
Ar¹, Ar², Ar⁴, and Ar⁵ each independently represent a divalent aromatic hydrocarbon group, a divalent heterocyclic group, or a group in which a divalent aromatic hydrocarbon group and a divalent heterocyclic group are bonded, and these groups may have a substituent; when there are a plurality of Ar² or Ar⁵, they may be the same or different;
Ar³ and Ar⁶ each independently represent a monovalent aromatic hydrocarbon group or a monovalent heterocyclic group, and these groups may have a substituent; when there are a plurality of Ar³ or Ar⁶, they may be the same or different;
provided that at least one of Ar¹, Ar², Ar³, Ar⁴, Ar⁵, or Ar⁶ has a group containing a crosslinkable group as a substituent;
X¹ represents a chlorine atom, a bromine atom, an iodine atom, or -O-S (=O) ₂R^{a1}, wherein R^{a1} represents an alkyl group or an aryl group, and these groups may have a substituent; a plurality of X¹ may be the same or different; and
X² represents -B(OH)₂, a borane residue, a boric acid ester residue, or -BF₃T, wherein T represents a lithium atom, a sodium atom, a potassium atom, a rubidium atom, or a cesium atom; and a plurality of X² may be the same or different.

3. The method for producing a polymer compound according to claim 2, wherein the group containing a crosslinkable group is a group represented by formula (5):
-L(̵Y)ₙ (5)
wherein L represents a single bond, or -(CH₂)-, -O-, - S-, -(CO)-, -(C₆H₄)-, or a divalent group in which two or more groups selected from these groups are bonded; provided that -O-and -O-, -S- and -S-, and -O- and -S- are not directly bonded to each other;
n represents an integer of 1 to 5; and
Y represents a crosslinkable group; when there are a plurality of Y, they may be the same or different.

4. The method for producing a polymer compound according to claim 3, wherein in formula (5), L is -(CH₂)ₘ-, - (CH₂) ₚ- (C₆H₄) - (CH₂) _{q}-, - (CH₂)ᵣ-O-(CH₂)ₛ-, or - (CH₂) ₜ- (C₆H₄) -O- (CH₂) ᵤ-;
m represents an integer of 0 to 20;
p represents an integer of 0 to 10;
q represents an integer of 0 to 10;
r represents an integer of 0 to 10,
s represents an integer of 0 to 10;
t represents an integer of 0 to 10; and
u represents an integer of 0 to 10.

5. The method for producing a polymer compound according to claim 3 or 4, wherein in formula (5), the crosslinkable group represented by Y is a group selected from group A of crosslinkable groups:
Group A of crosslinkable groups: 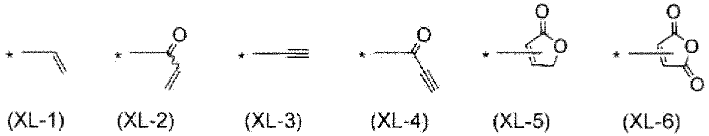 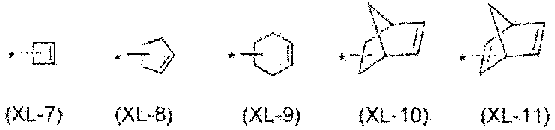 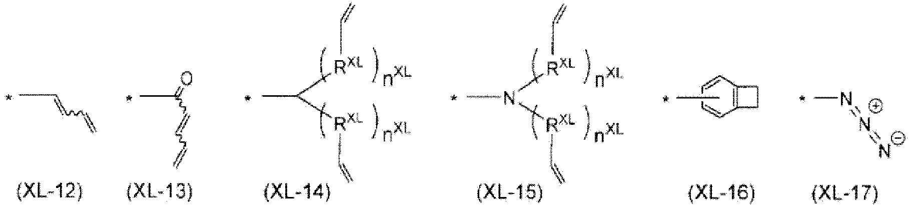 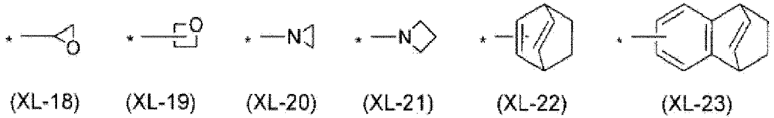
wherein each of these groups may have a substituent selected from the group consisting of an alkyl group and an aryl group;
n^{XL} represents an integer of 0 to 5; when there are a plurality of n^{XL}, they may be the same or different;
R^{XL} represents -(CH₂)-, -O-, -S-, -(CO)-, or a divalent group in which two or more groups selected from these groups are bonded; provided that -O- and -O-, -S- and -S-, and -O- and -S-are not directly bonded to each other; when there are a plurality of R^{XL}, they may be the same or different; and
* is a binding site with L.

6. The method for producing a polymer compound according to any one of claims 1 to 5, wherein the transition metal complex is a palladium complex containing palladium and at least one ligand selected from the group consisting of trialkylphosphine, dialkylmonoarylphosphine, monoalkyldiarylphosphine, and triarylphosphine; wherein aryl groups on these phosphines may have each independently 1 to 3 substituents selected from the group consisting of an alkyl group, an alkoxy group, a phenyl group, and a substituted amino group; wherein the phenyl group may have 1 to 3 substituents selected from the group consisting of an alkyl group and an alkoxy group.

7. The method for producing a polymer compound according to claim 5 or 6, wherein the crosslinkable group is a group selected from the group consisting of formula (XL-1) and formula (XL-16).

8. The method for producing a polymer compound according to any one of claims 1 to 7, wherein the first solvent is an aromatic hydrocarbon solvent, and the second solvent is an alcohol solvent.

9. The method for producing a polymer compound according to any one of claims 1 to 8, wherein 20 to 300 parts by weight of the second solvent is used with respect to 100 parts by weight of the solution containing the first solvent and the first polymer compound having a crosslinkable group.

10. The method for producing a polymer compound according to any one of claims 1 to 9, comprising, before step (2), a step of adsorbing and purifying the first polymer compound obtained in step (1).
